(19) **Europäisches Patentamt**
**European Patent Office**
**Office européen des brevets**

(11) **EP 4 757 484 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
*H04W 74/08* (2024.01)

(21) Application number: **24848042.8**

(22) Date of filing: **19.07.2024**

(52) Cooperative Patent Classification (CPC):
**H04L 5/14; H04W 72/0446; H04W 72/0453; H04W 74/08**

(86) International application number:
**PCT/CN2024/106331**

(87) International publication number:
**WO 2025/026083 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 CN 202310946453**

(71) Applicant: **Apogee 5G Global, LLC Plano, TX 75024 (US)**

(72) Inventors:
• **JIANG, Qi**
**Shanghai 201206 (CN)**
• **WANG, Ping**
**Shanghai 201206 (CN)**
• **ZHANG, Xiaobo**
**Shanghai 201206 (CN)**

(74) Representative: **Gunzelmann, Rainer Wuesthoff & Wuesthoff Patentanwälte und Rechtsanwalt PartG mbB Schweigerstraße 2 81541 München (DE)**

(54) **METHOD AND APPARATUS FOR USE IN NODE FOR WIRELESS COMMUNICATION**

(57) The present application discloses a method and apparatus for use in a node for wireless communication. A first node receives a first information block, wherein the first information block indicates a first symbol set; the first node selects a target RO from a first RO group, and sends a random access preamble in the target RO, wherein the first symbol set comprises at least one symbol configured as a downlink symbol by TDD uplink/downlink configuration signaling and used for uplink transmission, the first RO group comprises at least some ROs associated with a first SSB index in one SSB-RO mapping cycle, and the at least some ROs depend on whether the first RO group comprises an RO in the first symbol set. The present application optimizes random access process design, supports scenarios where ROs on SBFD symbols are used for random access, solves the problem of conflict between RO configuration and SBFD symbols, improves uplink coverage and reduces access latency.

FIG. 1

## Description

## Technical Field

The present application relates to a transmission method and apparatus in a wireless communication system, in particular to a method and apparatus for a random access procedure.

## Background Art

Application scenarios for future wireless communication systems are becoming increasingly diverse, and different application scenarios impose different performance requirements on the system. To meet the various performance requirements of multiple application scenarios, it was decided at the 3GPP (3rd Generation Partner Project) RAN (Radio Access Network) #72 Plenary Meeting to study new radio air interface technology (NR, New Radio) (or 5G). The WI (Work Item) for NR (New Radio) technology was approved at the 3GPP RAN #75 Plenary Meeting, initiating standardisation work for NR.

In existing NR systems, spectrum resources are statically divided into FDD (Frequency Division Duplexing) spectra and TDD (Time Division Duplexing) spectra. For the TDD spectrum, both a base station and user equipment (UE) operate in a half-duplex mode. This half-duplex mode avoids self-interference and can mitigate the impact of cross-link interference (CLI), but it also brings problems such as reduced resource utilisation and increased latency. In response to these problems, supporting a flexible duplex mode or a variable link direction (uplink or downlink or flexible) on the TDD spectrum or the FDD spectrum becomes a possible solution. At the 3GPP RAN #88e meeting and the 3GPP Rel-18 (Release-18) workshop, supporting more flexible duplex modes or full-duplex modes in NR Rel-18 received widespread attention and discussion, particularly the Sub-Band non-overlapping Full Duplex (SBFD) mode at the gNB (NR Node B) side. Communication under this mode suffers from severe interference, including self-interference and CLI. To solve the interference problem, advanced interference cancellation techniques are required, comprising antenna isolation, beamforming, radio frequency (RF) level interference cancellation and digital interference cancellation.

## Summary of the Invention

In the current standard, before transmitting a random access preamble, a UE has already selected one SSB. The UE selects an RO and a preamble from an RO set and preambles associated with the selected SSB. The base station determines the SSB selected by the UE based on the association relationship between the RO of the preamble detected and the SSB, thereby determining a downlink transmission beam. The association relationship of the SSB mapped to valid ROs supports three cases: many-to-one, one-to-one, and one-to-many. In TDD mode, not all ROs configured by the base station are necessarily valid; the UE still needs to judge whether an RO can be used for sending a preamble based on the frame structure; wherein, when the UE has received the frame structure configuration signaling *tdd-UL-DL-ConfigurationCommon,* valid ROs comprise ROs on UL (upLink) symbols. In SBFD scenarios, besides UL symbols, SBFD symbols can also be used for uplink transmission by SBFD-aware UE. Therefore, when ROs configured by the base station overlap with SBFD symbols, whether an SSB can be mapped to ROs on SBFD symbols and whether ROs on SBFD symbols can send preambles are problems that need to be solved.

In view of the above problems, the present application discloses a solution. It should be noted that although the original intention of the present application is for SBFD scenarios, the present application can also be applied to other non-SBFD scenarios. Furthermore, adopting a unified design scheme for different scenarios (such as other non-SBFD scenarios, including but not limited to capacity enhancement systems, proximity communication systems, unlicensed frequency domain communication, IoT (Internet of Things), URLLC (Ultra Reliable Low Latency Communication) networks, vehicle-to-everything communication, etc.) also helps reduce hardware complexity and cost. In the absence of conflicts, embodiments and features in the embodiments in any node of the present application can be applied to any other nodes. In the absence of conflicts, the embodiments and features in the embodiments of the present application may be arbitrarily combined with each other.

In particular, interpretations (if not specifically stated) of terminology, nouns, functions, and variables in the present application may refer to definitions in TS38 series and TS37 series of the standard protocol of 3GPP. If necessary, reference can be made to 3GPP standards TS38.211, TS38.212, TS38.213, TS38.214, TS38.215, TS38.300, TS38.304, TS38.305, TS38.321, TS38.331, TS37.355, TS38.423, to assist in the understanding of the present application.

As one embodiment, the interpretations of the terminologies in the present application refer to definitions of TS38 series of the standard protocol of 3GPP.

As one embodiment, the interpretations of the terminologies in the present application refer to definitions of TS37 series of the standard protocol of 3GPP.

As one embodiment, the interpretation of the terminology in the present application is based on the definition of the standard protocol of the Institute of Electrical and Electronics Engineers (IEEE).

The present application discloses a method used in a first node for wireless communication, comprising:

    receiving a first information block, the first information block indicating a first symbol set; and

selecting a target RO from a first RO group, and sending a random access preamble in the target RO, wherein the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

As one embodiment, the problems to be solved by the present application comprise: how the first node selects an RO for random access in an SBFD scenario.

As one embodiment, the problems to be solved by the present application comprise: in an SBFD scenario, when ROs for random access overlap with SBFD symbols, whether an RO on the SBFD symbols can be selected by the first node for sending a random access preamble.

As one embodiment, characteristics of the above method comprise: in an SBFD scenario, the present application introduces a first RO group, and the first node selects an RO from the first RO group to send a random access preamble, thereby solving the above problem.

As one embodiment, characteristics of the above method comprise: in an SBFD scenario, the present application introduces the first RO group, whether an RO on SBFD symbols can be selected by the first node for sending a random access preamble is determined according to whether the first RO group comprises an RO on SBFD symbols.

As one embodiment, characteristics of the above method comprise: the one SSB-RO mapping cycle is for legacy UE, and the present application is applicable to the case where one SSB is mapped to a plurality of ROs.

As one embodiment, characteristics of the above method comprise: the present application is applicable to cases where legacy UE and SBFD-aware UE adopt unified or separate RO configurations.

As one embodiment, benefits of the above method comprise: optimising the random access procedure design, applicable to the random access procedure in full-duplex scenarios.

As one embodiment, benefits of the above method comprise: when the first RO group comprises an RO in the first symbol set, uplink coverage can be increased and access latency reduced.

As one embodiment, benefits of the above method comprise: when the first RO group does not comprise an RO in the first symbol set, modifications to the current standard are minimal, with good backward compatibility.

According to one aspect of the present application, the above method is characterised by comprising:

receiving a second information block, the second information block indicating a first RO set; wherein each RO in the first RO set is mapped to the first SSB index, and there is at least one RO among the ROs included in the first RO group that belongs to the first RO set.

As one embodiment, characteristics of the above method comprise: the first RO group comprises at least one RO applicable to legacy UE.

As one embodiment, benefits of the above method comprise: ensuring that legacy UE can also access the network normally, improving transmission reliability.

As one embodiment, benefits of the above method comprise: reducing resource waste and redundancy, lowering network cost.

As one embodiment, benefits of the above method comprise: improving the probability of successful random access.

According to one aspect of the present application, the above method is characterised by comprising:

receiving first signaling, the first signaling indicating a first PRACH mask index value; wherein among the ROs associated with the first SSB index in the one SSB-RO mapping cycle, only an RO indicated by the first PRACH mask index value belongs to the first RO group.

As one embodiment, characteristics of the above method comprise: the present application is applicable to contention-free random access procedures.

As one embodiment, benefits of the above method comprise: allowing dynamic adjustment of access strategies and resource allocation based on network load conditions and user access requirements, providing better network performance and user experience.

As one embodiment, benefits of the above method comprise: enabling effective management and scheduling of user access, thereby improving network throughput and capacity.

According to one aspect of the present application, the above method is characterized in that: the more ROs included in the first RO group in the first symbol set, the fewer the ROs included in the at least some ROs.

As one embodiment, characteristics of the above method comprise: the number of ROs included in the first RO group is fixed or configurable.

As one embodiment, benefits of the above method comprise: avoiding excessively high network cost due to an excessive number of ROs in the first RO group, achieving a balance between ROs on SBFD symbols and legacy valid ROs.

According to one aspect of the present application, the above method is characterised in that: when the first RO group does not comprise an RO in the first symbol set, the first RO group comprises all ROs associated with the first SSB index in one SSB-RO mapping cycle; when the first RO group comprises an RO in the first symbol set, the first RO group comprises some ROs associated with the first SSB index in one SSB-RO mapping cycle.

As one embodiment, characteristics of the above method comprise: when an RO on SBFD symbols can be used for random access, the UE still has the opportunity to select a legacy RO for random access after selecting an SSB.

As one embodiment, benefits of the above method comprise: minimal modifications to the standard and good backward compatibility.

As one embodiment, benefits of the above method comprise: flexible applicability to different terminals, reducing requirements on terminal capabilities.

As one embodiment, benefits of the above method comprise: ensuring legacy UE can also access the network normally.

According to one aspect of the present application, the above method is characterised by comprising:

receiving a target information block;
wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

As one embodiment, the problems to be solved by the present application comprise: how to determine whether an RO occupying a full-duplex symbol is valid in an SBFD scenario.

As one embodiment, characteristics of the above method comprise: in an SBFD scenario, the present application solves this problem by explicitly or implicitly indicating through the target information block whether a full-duplex symbol is used for the random access.

As one embodiment, characteristics of the above method comprise: when the target information block indicates that the first symbol set is not used for random access, the first node assumes that an RO occupying a full-duplex symbol is not a valid RO.

As one embodiment, benefits of the above method comprise: the base station can flexibly indicate whether a full-duplex symbol is used for random access based on the current interference environment and resource configuration.

As one embodiment, benefits of the above method comprise: when the target information block indicates that the first symbol set is used for random access, uplink coverage is increased.

As one embodiment, benefits of the above method comprise: flexible applicability to different terminals, reducing requirements on terminal capabilities.

According to one aspect of the present application, the above method is characterized in that: when the first RO group does not comprise an RO in the first symbol set, the first node selects the target RO from the first RO group with equal probability; when the first RO group comprises an RO in the first symbol set, the first node preferentially selects the target RO from K1 ROs of the first RO group, the K1 ROs do not comprise an RO in the first symbol set.

As one embodiment, the problems to be solved by the present application comprise: how the first node selects an RO for random access in an SBFD scenario.

As one embodiment, characteristics of the above method comprise: in an SBFD scenario, the present application solves the above problem by adopting different RO selection methods according to whether the first RO group comprises an RO in the first symbol set.

As one embodiment, characteristics of the above method comprise: when the first node selects the target RO, the K1 ROs have the same probability of being selected.

As one embodiment, benefits of the above method comprise: when the ROs in the first RO group do not occupy full-duplex symbols, following the RO selection method in the current standard, with minimal modifications to the standard and good backward compatibility.

As one embodiment, benefits of the above method comprise: compared to a half-duplex symbol, the interference environment on a full-duplex symbol is more complex, and the probability of failure when executing the random access procedure on a full-duplex symbol is also relatively higher. Therefore, when the first RO group simultaneously comprises an RO occupying a full-duplex symbol and an RO not occupying a full-duplex symbol, the first node preferentially selects an RO not occupying the full-duplex symbol to initiate random access, which is conducive to improving the success rate of the random access procedure.

As one embodiment, benefits of the above method comprise: when initiating random access on an RO on a full-duplex symbol, to ensure random access success as much as possible, the UE sending the random access preamble may require higher power or a larger step size. The first node preferentially selecting an RO not occupying a full-duplex symbol to initiate random access is conducive to reducing UE power and saving energy.

According to one aspect of the present application, the above method is characterized in that the first node comprises one user equipment.

According to one aspect of the present application, the above method is characterized in that the first node comprises one relay node.

The present application discloses a method used in a second node for wireless communication, comprising:

sending a first information block, the first information block indicating a first symbol set; and

receiving a random access preamble in a target RO, wherein a recipient of the first information block selects the target RO from a first RO group; the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

According to one aspect of the present application, the above method is characterized by comprising:

sending a second information block, the second information block indicating a first RO set;

wherein each RO in the first RO set is mapped to the first SSB index, and there is at least one RO among the ROs included in the first RO group that belongs to the first RO set.

According to one aspect of the present application, the above method is characterized by comprising:

sending first signaling, the first signaling indicating a first PRACH mask index value;

wherein among the ROs associated with the first SSB index in the one SSB-RO mapping cycle, only an RO indicated by the first PRACH mask index value belongs to the first RO group.

According to one aspect of the present application, the above method is characterized in that: the more ROs included in the first RO group in the first symbol set, the fewer the ROs included in the at least some ROs.

According to one aspect of the present application, the above method is characterized in that: when the first RO group does not comprise an RO in the first symbol set, the first RO group comprises all ROs associated with the first SSB index in one SSB-RO mapping cycle; when the first RO group comprises an RO in the first symbol set, the first RO group comprises some ROs associated with the first SSB index in one SSB-RO mapping cycle.

According to one aspect of the present application, the above method is characterized by comprising:

sending a target information block;

wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

According to one aspect of the present application, the above method is characterized in that: when the first RO group does not comprise an RO in the first symbol set, the recipient of the first information block selects the target RO from the first RO group with equal probability; when the first RO group comprises an RO in the first symbol set, the recipient of the first information block preferentially selects the target RO from K1 ROs of the first RO group, the K1 ROs do not comprise an RO in the first symbol set.

According to one aspect of the present application, the above method is characterized in that the second node is a base station.

According to one aspect of the present application, the above method is characterized in that the second node is a user equipment.

According to one aspect of the present application, the above method is characterized in that the second node is a relay node.

The present application discloses a device used in a first node for wireless communication, comprising:

a first receiver receiving a first information block, the first information block indicating a first symbol set; and

a first transmitter selecting a target RO from a first RO group, and sending a random access preamble in the target RO,

wherein the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

The present application discloses a device used in a second node for wireless communication, comprising:

a second transmitter sending a first information block, the first information block indicating a first symbol set; and

a second receiver receiving a random access preamble in a target RO,

wherein a recipient of the first information block selects the target RO from a first RO group; the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

As one embodiment, compared to traditional solutions, the present application has the following advantages but is not limited to:

enhancing random access procedure design in SBFD scenarios, increasing uplink coverage and reducing access latency while ensuring random access success rate;

flexibly applicable to different terminals, reducing requirements on terminal capabilities;

effectively managing and scheduling user access, thereby improving network throughput and capacity.

## Brief Description of the Drawings

Other features, purposes and advantages of the present application will become more apparent by reading the detailed description of the non-limiting embodiments in the following drawings with reference to them:

FIG. 1 illustrates a flowchart of transmission by a first node according to one embodiment of the present application;

FIG. 2 illustrates a schematic diagram of a network architecture according to one embodiment of the present application;

FIG. 3 shows a schematic diagram of one embodiment of a wireless protocol architecture for a user plane and a control plane according to one embodiment of the present application;

FIG. 4 shows a schematic diagram of a first communication device and a second communication device according to one embodiment of the present application;

FIG. 5 illustrates a flowchart of transmission between a first node and a second node according to one embodiment of the present application;

FIG. 6 illustrates a schematic diagram of a relationship between ROs in a first RO set and a first SSB index according to one embodiment of the present application;

FIG. 7 illustrates a schematic diagram of a relationship between a first symbol set and a first RO group according to one embodiment of the present application;

FIG. 8 illustrates a schematic diagram of a relationship between a first PRACH mask index value and a first RO group according to one embodiment of the present application;

FIG. 9 illustrates a schematic diagram of a relationship between the number of ROs included in at least some ROs and the number of ROs included in a first RO group according to one embodiment of the present application;

FIG. 10 illustrates a schematic diagram of a relationship between at least some ROs and whether a first RO group comprise an RO in a first symbol set according to one embodiment of the present application;

FIG. 11 illustrates a schematic diagram of how a first node selects a target RO according to one embodiment of the present application;

FIG. 12 illustrates a schematic diagram of ROs included in a first RO group according to one embodiment of the present application;

FIG. 13 illustrates a schematic diagram of symbols in a first symbol set according to one embodiment of the present application;

FIG. 14 illustrates a structural block diagram of a processing apparatus used in a first node according to one embodiment of the present application;

FIG. 15 illustrates a structural block diagram of a processing apparatus used in a second node according to one embodiment of the present application.

## Detailed Description of Embodiments

The technical solutions of the present application will be further described in detail below in conjunction with the drawings. It should be noted that, in the absence of conflicts, embodiments and the features in the embodiments in the present application can be arbitrarily combined with each other.

## Embodiment 1

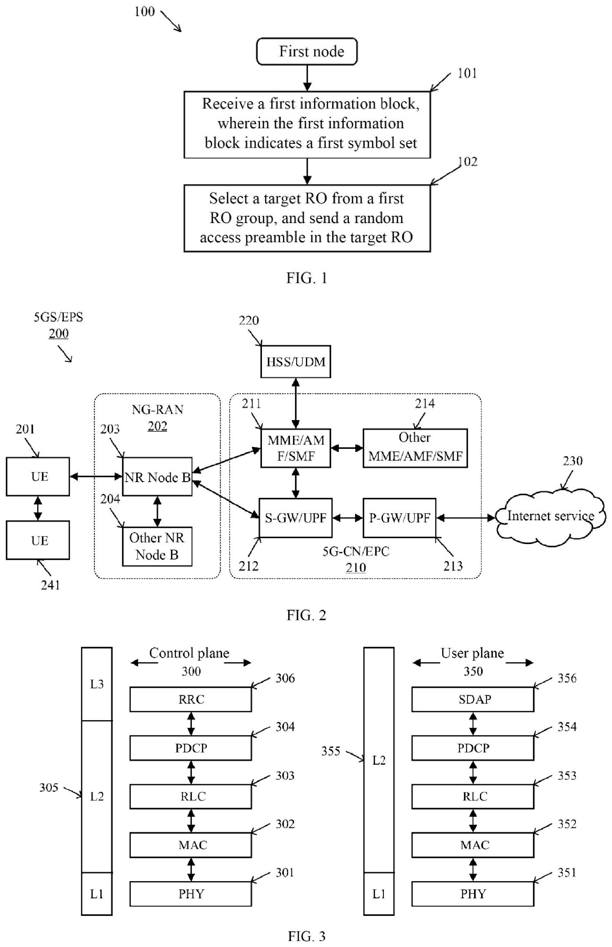

Embodiment 1 illustrates a flowchart of transmission by a first node according to one embodiment of the present application, as shown in FIG. 1. In FIG. 1, each block represents a step. In particular, the order of steps in the blocks does not represent a specific time sequence relation between the steps.

The first node receives a first information block in step 101, the first information block indicating a first symbol set; and selects a target RO from a first RO group, and sends a random access preamble in the target RO in step 102.

In Embodiment 1, the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the RO refers to: PRACH (Physical Random Access CHannel) Occasion.

As one embodiment, the RO refers to: RACH (Random Access CHannel) Occasion.

As one embodiment, the RO refers to: RA (Random Access) Occasion.

As one embodiment, the TDD refers to: Time Division Duplex.

As one embodiment, the TDD refers to: Time Division Duplexing.

As one embodiment, the SSB refers to: Synchronisation Signal Block.

As one embodiment, the SSB refers to: SS (Synchronisation Signal)/PBCH (Physical Broadcast CHannel) block.

Typically, reception occasions of a PBCH, a PSS (Primary Synchronisation Signal) and an SSS (Secondary Synchronisation Signal) are in consecutive symbols and form an SS/PBCH block.

As one embodiment, the first information block is carried by higher layer signaling.

As one embodiment, the first information block is carried by RRC (Radio Resource Control) signaling.

As one embodiment, the first information block comprises information in at least one RRC IE (Information Element).

As one embodiment, the first information block comprises some or all fields included in one RRC IE.

As one embodiment, the first information block comprises some or all fields included in each RRC IE among multiple RRC IEs.

As one embodiment, the first information block comprises some or all fields included in one SIB (System Information Block).

As one embodiment, the first information block comprises some or all fields included in an MIB (Master Information Block).

As one embodiment, the first information block comprises some or all fields included in an SIB1 (System Information Block 1).

As one embodiment, the first information block comprises some or all fields included in RMSI (Remaining Minimum System Information).

As one embodiment, the first information block is cell-common.

As one embodiment, the first information block is cell-specific.

As one embodiment, the first information block is group-common.

As one embodiment, the first information block is UE (User Equipment)-dedicated.

As one embodiment, the first information block is configured per subband.

As one embodiment, the first information block is configured per BWP (BandWidth Part).

As one embodiment, the name of the RRC signaling carrying the first information block comprises "TDD".

As one embodiment, the name of the RRC signaling carrying the first information block comprises "DL".

As one embodiment, the name of the RRC signaling carrying the first information block comprises "UL".

As one embodiment, the name of the RRC signaling carrying the first information block comprises "Config".

As one embodiment, the name of the RRC signaling carrying the first information block comprises "SBFD".

As one embodiment, the name of the RRC signaling carrying the first information block comprises "subband".

As one embodiment, the name of the RRC signaling carrying the first information block comprises "duplex".

As one embodiment, the first information block is carried by a MAC CE (Medium Access Control layer Control Element).

As one embodiment, the first information block comprises information in at least one MAC CE.

As one embodiment, the first information block is carried by dynamic signaling.

As one embodiment, the first information block is carried by physical layer signaling.

As one embodiment, the first information block is carried by DCI.

As one embodiment, the first information block comprises information in at least one RRC IE and information in at least one DCI.

As one embodiment, the first information block comprises some or all fields of a DCI format.

As one embodiment, the first information block comprises some or all fields of DCI format 2_N, where N is a non-negative integer.

As one embodiment, the first information block comprises some or all fields of DCI format 2_8.

As one embodiment, the first information block is used to configure slots or symbols for SBFD (SubBand non-overlapping Full Duplex).

As one embodiment, the first information block is used to configure slots or symbols supporting full duplex.

As one embodiment, the first symbol set comprises at least one symbol.

As one embodiment, the first symbol set comprises multiple symbols.

As one embodiment, the first symbol set comprises multiple symbols, the multiple symbols being consecutive.

As one embodiment, the first symbol set comprises multiple symbols, there are at least two symbols among the multiple symbols being non-consecutive.

As one embodiment, the symbols included in the first symbol set form one or more slots.

As one embodiment, the first symbol set comprises some symbols in one slot.

As one embodiment, the first symbol set comprises all symbols of each slot among at least one slot, and comprises some symbols of each slot among at least one slot.

Typically, one slot in the present application comprises 14 symbols.

As one embodiment, the time domain resources occupied by the symbols included in the first symbol set are periodic.

As one embodiment, the first symbol set comprises at least one full-duplex symbol.

As one embodiment, the first symbol set comprises at least one SBFD symbol.

As one embodiment, all symbols included in the first symbol set are full-duplex symbols.

As one embodiment, all symbols included in the first symbol set are SBFD symbols.

As one embodiment, the first information block explicitly indicates the first symbol set.

As one embodiment, the first information block implicitly indicates the first symbol set.

As one embodiment, the first information block indicates a time domain position of a symbol included in the first symbol set.

As one embodiment, the first information block indicates a time domain position of a slot included in the first symbol set.

As one embodiment, the first information block indicates a period of a symbol included in the first symbol set.

As one embodiment, the first information block indicates a period of a slot included in the first symbol set.

As one embodiment, the first information block indicates a position of a symbol included in the first symbol set within one slot.

As one embodiment, the first information block indicates a position of a symbol included in the first symbol set within one period.

As one embodiment, the first information block indicates a position of a slot included in the first symbol set within one period.

As one embodiment, the first information block indicates slots occupied by a symbol included in the first symbol set.

As one embodiment, the first information block indicates a time domain position of a slot occupied by a symbol included in the first symbol set.

As one embodiment, the first information block indicates a position of a slot occupied by a symbol included in the first symbol set within one period.

As one embodiment, the symbol in the present application is a single-carrier symbol.

As one embodiment, the symbol in the present application is a multi-carrier symbol.

As one embodiment, the multi-carrier symbol in the present application is an SC-FDMA (Single Carrier-Frequency Division Multiple Access) symbol.

As one embodiment, the multi-carrier symbol in the present application is an FBMC (Filter Bank Multi Carrier) symbol.

As one embodiment, the multi-carrier symbol in the present application is an OFDM (Orthogonal Frequency Division Multiplexing) symbol.

As one embodiment, the symbol in the present application is obtained after transform precoding output undergoes OFDM symbol generation.

As one embodiment, the multi-carrier symbol in the present application is a DFT-s-OFDM (Discrete Fourier Transform-spread-OFDM) symbol.

As one embodiment, the multi-carrier symbol in the present application comprises a CP-OFDM (Cyclic Prefix-OFDM) symbol.

As one embodiment, an RO in the present application occupies at least one subcarrier in the frequency domain.

As one embodiment, an RO in the present application occupies at least one symbol in the time domain.

As one embodiment, the RO in the present application occupies at least one RE (Resource Element).

Typically, one RE occupies one symbol in the time domain and one subcarrier in the frequency domain.

As one embodiment, the frequency domain resources occupied by the RO in the present application belong to a UL (UpLink) carrier.

As one embodiment, the frequency domain resources occupied by the RO in the present application belong to a UL (UpLink) carrier or a DL (DownLink) carrier.

As one embodiment, the first RO group comprises at least one RO.

As one embodiment, the first node selects the target RO from the first RO group.

As one embodiment, the first node autonomously selects the target RO from the first RO group.

As one embodiment, the first node selects the target RO from the first RO group in an implementation-related manner.

As one embodiment, the first node randomly selects the target RO from all ROs included in the first RO group.

As one embodiment, the first node selects the target RO from all ROs included in the first RO group with equal probability.

As one embodiment, the first node preferentially selects the target RO from some ROs included in the first RO group.

As one embodiment, a recipient of the random access preamble can determine the first SSB index based on the target RO and the random access preamble sent in the target RO.

As one embodiment, the first node assumes that all ROs in the first RO group are mapped to the first SSB index.

As one embodiment, the first node sends a random access preamble in the target RO.

As one embodiment, the random access preamble sent by the first node in the target RO is selected by the MAC entity of the first node from random access preambles used for Contention Based Random Access (CBRA).

As one embodiment, the random access preamble sent by the first node in the target RO is allocated by the sender of the first information block.

As one embodiment, the random access preamble sent by the first node in the target RO is configured by the sender of the first information block.

As one embodiment, the random access preamble sent by the first node in the target RO is indicated by the sender of the first information block.

As one embodiment, a preamble in the present application comprises a random access preamble.

As one embodiment, a preamble in the present application comprises a preamble sequence.

As one embodiment, a preamble in the present application comprises a pseudo-random sequence.

As one embodiment, a preamble in the present application comprises a ZC (Zaddoff Chu) sequence.

As one embodiment, the RO described in the present application corresponds to one or more preambles.

As one embodiment, the RO described in the present application corresponds to one or more preamble indices.

As one embodiment, the RO described in the present application corresponds to one or more preamble sequences.

As one embodiment, the RO described in the present application is configured for transmitting one or more preambles.

As one embodiment, the RO described in the present application is configured for transmitting one or more preamble indices.

As one embodiment, the RO described in the present application is configured for transmitting one or more preamble sequences.

As one embodiment, the first symbol set comprises at least one symbol configured as a downlink symbol by the TDD uplink/downlink configuration signaling and used for uplink transmission.

As one embodiment, the TDD uplink/downlink configuration signaling comprises higher layer signaling.

As one embodiment, the TDD uplink/downlink configuration signaling comprises semi-static signaling.

As one embodiment, the TDD uplink/downlink configuration signaling comprises cell-common signaling.

As one embodiment, the TDD uplink/downlink configuration signaling comprises UE group-common signaling.

As one embodiment, the TDD uplink/downlink configuration signaling comprises UE-dedicated signaling.

As one embodiment, the configuration of a link direction configured by the TDD uplink/downlink configuration signaling applies to the entire frequency band occupied by a serving cell to which it belongs.

As one embodiment, the configuration of the link direction configured by the TDD uplink/downlink configuration signaling applies to the entire carrier to which it belongs.

As one embodiment, the TDD uplink/downlink configuration signaling comprises RRC signaling.

As one embodiment, the TDD uplink/downlink configuration signaling comprises one or more RRC IEs.

As one embodiment, the TDD uplink/downlink configuration signaling comprises multiple RRC IEs.

As one embodiment, the TDD uplink/downlink configuration signaling comprises one or more fields of each RRC IE among multiple RRC IEs.

As one embodiment, the TDD uplink/downlink configuration signaling is one RRC IE.

As one embodiment, the TDD uplink/downlink configuration signaling is one or more fields of one RRC IE.

As one embodiment, the TDD uplink/downlink configuration signaling comprises a *TDD-UL-DL-Config-Common* IE.

As one embodiment, the TDD uplink/downlink configuration signaling comprises a *TDD-UL-DL-Config-Dedicated* IE.

As one embodiment, the TDD uplink/downlink configuration signaling comprises the *TDD-UL-DL-ConfigCommon* IE and the *TDD-UL-DL-ConfigDedicated* IE.

As one embodiment, the TDD uplink/downlink configuration signaling comprises at least the former of the *TDD-UL-DL-ConfigCommon* IE and the *TDD-UL-DL-ConfigDedicated* IE.

As one embodiment, the TDD uplink/downlink configuration signaling comprises a *TDD-UL-DL-Pattern* field.

As one embodiment, the TDD uplink/downlink configuration signaling indicates downlink slots and downlink symbols within a period.

As one embodiment, the TDD uplink/downlink configuration signaling indicates that at least one slot within a period is a downlink slot and/or at least one symbol is a downlink symbol.

As one embodiment, the TDD uplink/downlink configuration signaling indicates at least one slot format, the at least one slot format being used for determining at least one downlink symbol.

As one embodiment, the TDD uplink/downlink configuration signaling is used for indicating from one period, at least one slot comprising only downlink symbols and at least one downlink symbol following the slot comprising only the downlink symbols.

As one embodiment, the TDD uplink/downlink configuration signaling indicates, within one period, the number of starting downlink slots, the number of downlink symbols immediately following the starting downlink slots, and a period length.

As one embodiment, the TDD uplink/downlink configuration signaling is used for indicating at least one pattern, any pattern indicated by the TDD uplink/downlink configuration signaling providing a slot configuration period length, the number of slots comprising only downlink symbols, the number of downlink symbols, the number of slots comprising only uplink symbols, and the number of uplink symbols.

As one embodiment, the TDD uplink/downlink configuration signaling is used for indicating at least one pattern, the at least one pattern indicated by the TDD uplink/downlink configuration signaling providing at least one slot comprising only downlink symbols and at least one downlink symbol not belonging to slots comprising only downlink symbols within one period.

As one embodiment, the TDD uplink/downlink configuration signaling comprises a MAC CE.

As one embodiment, the TDD uplink/downlink configuration signaling comprises dynamic signaling.

As one embodiment, the TDD uplink/downlink configuration signaling comprises physical layer signaling.

As one embodiment, the TDD uplink/downlink configuration signaling comprises layer 1 signaling.

As one embodiment, the TDD uplink/downlink configuration signaling comprises DCI.

As one embodiment, CRC (Cyclic Redundancy Check) of the TDD uplink/downlink configuration signaling is scrambled by a cell-common RNTI (Radio Network Temporary Identifier).

As one embodiment, the CRC of the TDD uplink/downlink configuration signaling is scrambled by a UE group-common RNTI.

As one embodiment, the CRC of the TDD uplink/downlink configuration signaling is scrambled by an SFI (Slot Format Indicator)-RNTI.

As one embodiment, the TDD uplink/downlink configuration signaling DCI is an SFI.

As one embodiment, the format used by the TDD uplink/downlink configuration signaling is DCI format 2_0.

As one embodiment, the TDD uplink/downlink configuration signaling comprises RRC layer signaling and physical layer signaling.

As one embodiment, the TDD uplink/downlink configuration signaling is jointly carried by RRC layer signaling and physical layer signaling.

As one sub-embodiment of this embodiment, the RRC signaling comprises at least the former of the *TDD-UL-DL-ConfigCommon* IE and the *TDD-UL-DL-ConfigDedicated* IE.

As one sub-embodiment of this embodiment, the physical layer signaling comprises some or all fields of one piece of DCI.

As one sub-embodiment of this embodiment, the physical layer signaling is an SFI.

As one embodiment, the first information block is carried by the TDD uplink/downlink configuration signaling.

As one embodiment, the first information block comprises part of information in the TDD uplink/downlink configuration signaling.

As one embodiment, the first information block and the TDD uplink/downlink configuration signaling belong to different fields of the same RRC IE.

As one sub-embodiment of this embodiment, benefits of the above method comprise: saving signaling overhead.

As one embodiment, the first information block and the TDD uplink/downlink configuration signaling belong to different RRC IEs.

As one sub-embodiment of this embodiment, benefits of the above method comprise: flexible indications.

As one embodiment, the one SSB-RO mapping cycle refers to: mapping all SSBs transmitted within one SSB period to an RO once.

As one embodiment, the one SSB period in the present application is carried by SIB1.

As one embodiment, the one SSB period in the present application is 5 milliseconds (ms).

As one embodiment, the SSBs transmitted within the one SSB period in the present application are indicated by a sender of the first information block.

As one embodiment, the SSBs transmitted within the one SSB period in the present application are configured by the sender of the first information block.

As one embodiment, the one SSB-RO mapping cycle refers to: mapping all SSBs transmitted in one SSB discovery burst to an RO once.

As one embodiment, the period information of the one SSB discovery burst in the present application is carried by SIB1.

As one embodiment, the period of the one SSB discovery burst in the present application is 5 ms.

As one embodiment, SSBs transmitted within the one SSB discovery burst in the present application are indicated by the sender of the first information block.

As one embodiment, the SSBs transmitted within the one SSB discovery burst in the present application are configured by the sender of the first information block.

As one embodiment, the first node assumes that the period of the one SSB discovery burst in the present application is equal to the period of the one SSB in the present application.

As one embodiment, the one SSB-RO mapping cycle is used for determining the mapping relationship between all SSB indices and ROs within one time window.

As one embodiment, the one SSB-RO mapping cycle is used for determining at least one of time domain positions or frequency domain positions of ROs mapped to all SSB indices within one time window.

As one embodiment, the order of mapping one SSB index to ROs in the one SSB-RO mapping cycle is: first, within one RO, arrangement in an ascending order of random access preamble indices is achieved; second, multiple frequency-division multiplexed ROs are arranged in an ascending order of frequency resource indices; afterwards, time-division multiplexed ROs within one PRACH slot are arranged in an increasing order of time resource indices; and finally, arrangement in an ascending order of PRACH slot indices is achieved.

As one embodiment, the order of mapping one SSB index to ROs in the one SSB-RO mapping cycle is:

first, multiple frequency-division multiplexed ROs are arranged in an ascending order of frequency resource indices; second, time-division multiplexed ROs within one PRACH slot are arranged in an increasing order of time resource indices; and finally, arrangement in an ascending order of PRACH slot indices is achieved.

As one embodiment, one association period in the present application comprises at least the one SSB-RO mapping cycle.

As one embodiment, the one SSB-RO mapping cycle corresponds to one association period.

As one embodiment, the one SSB-RO mapping cycle corresponds to a cycle formed by all ROs associated with one SSB index within one association period.

As one embodiment, one association period comprises one or more RO sets associated with one SSB index, any RO set of the one or more RO sets corresponding to one SSB-RO mapping cycle.

As one sub-embodiment of this embodiment, any RO set of the multiple RO sets indices ROs in an increasing manner.

As one sub-embodiment of this embodiment, the indexing method of ROs in any two RO sets of the multiple RO sets is repetitive.

As one sub-embodiment of this embodiment, the number of ROs included in any RO set of the multiple RO sets is indicated by higher layer signaling, or indicated by DCI (Downlink Control Information).

As one embodiment, the one association period in the present application corresponds to the minimum period corresponding to Q1 SSB indices being mapped to ROs at least once, where Q1 is a positive integer greater than 1.

As one sub-embodiment of this embodiment, Q1 is $N_{Tx}^{SSB}$ in 3GPP (3rd Generation Partner Project) TS (Technical Specification) 38.213.

As one sub-embodiment of this embodiment, Q1 is the total number of SSB indices configured by the sender of the first information block.

As one sub-embodiment of this embodiment, Q1 is the total number of SSB indices configured by the first node.

As one sub-embodiment of this embodiment, Q1 is the total number of SSBs transmitted within the one SSB period in the present application.

As one sub-embodiment of this embodiment, Q1 is the total number of SSBs transmitted in the one SSB discovery burst in the present application.

As one embodiment, the one association period in the present application is an integer multiple of a PRACH configuration period comprising at least one SSB-RO cyclic mapping.

As one sub-embodiment of this embodiment, the PRACH configuration period is configured by the sender of the first information block.

As one sub-embodiment of this embodiment, the PRACH configuration period is indicated by the sender of the first information block.

As one sub-embodiment of this embodiment, the one association period is not greater than 160ms.

As one sub-embodiment of this embodiment, the one association period is predefined.

As one sub-embodiment of this embodiment, the mapping between the association period and the PRACH configuration period refers to table 8.1-1 in 3GPP TS 38.213.

As one embodiment, there is one RO in the one association period in the present application that is not mapped to an SSB.

As one embodiment, all ROs in the one association period in the present application are mapped to an SSB.

As one embodiment, the first SSB index is one SSB Index.

As one embodiment, the first SSB index is one SSB-Index.

As one embodiment, the first SSB index is one non-negative integer.

As one embodiment, the first SSB index is not greater than 7.

As one embodiment, the first SSB index is not greater than 63.

As one embodiment, the first SSB index identifies one SSB.

As one embodiment, the SSB identified by the first SSB index is transmitted within one SSB period.

As one embodiment, the SSB identified by the first SSB index is transmitted within one SSB discovery burst.

As one embodiment, the first SSB index is mapped to a plurality of ROs.

As one embodiment, the first SSB index is mapped to a plurality of ROs in one SSB-RO cyclic mapping.

As one embodiment, the SSB in the present application refers to: SS/PBCH block.

As one embodiment, the SSB in the present application refers to: Synchronisation Signal/Physical Broadcast CHannel block.

Typically, reception occasions of a PBCH (Physical Broadcast CHannel), a PSS (Primary Synchronisation Signal) and an SSS (Secondary Synchronisation Signal) are in consecutive symbols and form an SS/PBCH block.

As one embodiment, ROs in the one SSB-RO cyclic mapping that are associated with the first SSB index are for legacy UE.

As one embodiment, the ROs in the one SSB-RO cyclic mapping that are associated with the first SSB index are for Rel-17 (Release-17) UE.

As one embodiment, the ROs in the one SSB-RO cyclic mapping that are associated with the first SSB index are for UE of releases prior to Rel-17.

As one embodiment, the random access preamble transmitted by the first node in the target RO is associated with the first SSB index.

As one embodiment, the at least some ROs depend on whether the first RO group comprises an RO in the first symbol set.

As one embodiment, the first RO group comprises an RO in the first symbol set.

As one embodiment, the first RO group does not comprise an RO in the first symbol set.

As one embodiment, the first RO group comprises an RO in the first symbol set and an RO outside the first symbol set.

As one embodiment, "RO in the first symbol set" refers to: time domain resources occupied by the RO comprise the first symbol set.

As one embodiment, "RO in the first symbol set" refers to: the time domain resources occupied by the RO belong to the first symbol set.

As one embodiment, "RO in the first symbol set" refers to: the time domain resources occupied by the RO overlap with the first symbol set.

As one embodiment, "RO in the first symbol set" refers to: there is at least one symbol among symbols occupied by the RO that belongs to the first symbol set.

As one embodiment, "RO in the first symbol set" refers to: all symbols occupied by the RO belong to the first symbol set.

As one embodiment, "RO outside the first symbol set" refers to: time domain resources occupied by the RO do not comprise the first symbol set.

As one embodiment, "RO outside the first symbol set" refers to: time domain resources occupied by the RO do not belong to the first symbol set.

As one embodiment, "RO outside the first symbol set" refers to: time domain resources occupied by the RO are orthogonal to the first symbol set.

As one embodiment, "RO outside the first symbol set" refers to: a symbol occupied by the RO does not belong to the first symbol set.

As one embodiment, "RO outside the first symbol set" refers to: the RO does not occupy a symbol in the first symbol set.

As one embodiment, the number of ROs included in the first RO group is configured by the sender of the first information block.

As one embodiment, the number of ROs included in the first RO group is indicated by the sender of the first information block.

As one embodiment, the number of ROs included in the first RO group is predefined.

As one embodiment, the number of ROs included in the first RO group equals the number of ROs in the one SSB-RO mapping cycle that are associated with the first SSB index.

As one embodiment, the number of ROs included in the first RO group is less than the number of ROs in the one SSB-RO mapping cycle that are associated with the first SSB index.

As one embodiment, the first RO group comprises an RO in the first symbol set, and the first RO group comprises some ROs associated with the first SSB index in one SSB-RO mapping cycle.

As one embodiment, the first RO group comprises an RO in the first symbol set, and the first RO group comprises all ROs associated with the first SSB index in one SSB-RO mapping cycle.

As one embodiment, the first RO group does not comprise an RO in the first symbol set, and the first RO group comprises all ROs associated with the first SSB index in one SSB-RO mapping cycle.

As one embodiment, the first RO group does not comprise an RO in the first symbol set, and the first RO group comprises some ROs associated with the first SSB index in one SSB-RO mapping cycle.

## Embodiment 2

Embodiment 2 illustrates a schematic diagram of a network architecture according to one embodiment of the present application, as shown in FIG. 2.

FIG. 2 illustrates a network architecture of long-term evolution (LTE), long-term evolution advanced (LTE-A) and future 5G systems. The network architecture of the LTE, LTE-A and future 5G systems is called an evolved packet system (EPS). The 5G NR or LTE network architecture may be referred to as a 5G system (5GS)/EPS 200 or some other suitable terminologies. The 5GS/EPS 200 may comprise one or more pieces of UE 201, one piece of UE 241 performing sidelink (SL) communication with the UE 201, a next generation radio access network (NG-RAN) 202, a 5G core network (5G-CN)/evolved packet core (EPC) 210, a home subscriber server (HSS)/unified data management (UDM) 220 and an Internet service 230. The 5GS/EPS 200 may be interconnected with other access networks, but these entities/interfaces are not shown for simplicity. As shown in FIG. 2, the 5GS/EPS 200 provides a packet switching service, however, those skilled in the art will readily appreciate that the various concepts presented throughout the present application may be extended to networks providing circuit switching services. The NG-RAN 202 comprises an NR Node B (gNB) 203 and other gNBs 204. The gNB 203 provides user and control plane protocol termination towards the UE 201. The gNB 203 may be connected to the other gNBs 204 via an Xn interface (e.g., backhaul). The gNB 203 may also be referred to as a base station, a base transceiving station, a radio base station, a radio transceiving device, a transceiving device function, a basic service set (BSS), an extended service set (ESS), a transmitter receiver point (TRP), or some other suitable terminologies. The gNB 203 provides an access point to the 5G-CN/EPC 210 for the UE 201. Instances of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 via an S1/NG interface. The 5G-CN/EPC 210 comprises a mobility management entity (MME)/authentication management field (AMF)/session management function (SMF) 211, other MME/AMF/SMF 214, a service gateway (S-GW)/user plane function (UPF) 212, and a packet data network gateway (P-GW)/UPF 213. The MME/AMF/SMF 211 is a control node that handles signaling between the UE 201 and the 5G-CN/EPC 210. Generally, the MME/AMF/SMF 211 provides bearer and connection management. All user Internet protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, IP multimedia subsystem (IMS) and packet switching services.

As one embodiment, the first node in the present application comprises the UE 201.

As one embodiment, the second node in the present application comprises the gNB 203.

As one embodiment, the UE 201 supports relay transmission.

As one embodiment, the UE 201 comprises a mobile phone.

As one embodiment, the UE 201 is a vehicle comprising an automobile.

As one embodiment, the gNB 203 is a Macro Cell base station.

As one embodiment, the gNB 203 is a Micro Cell base station.

As one embodiment, the gNB 203 is a Pico Cell base station.

As one embodiment, the gNB 203 is a Femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 is a test device (such as a transceiving apparatus that simulates some functions of a base station, and a signaling tester).

As one embodiment, the wireless link from UE 201 to gNB 203 is an uplink, the uplink being used to perform uplink transmission.

As one embodiment, the wireless link from gNB 203 to UE 201 is a downlink, the downlink being used to perform downlink transmission.

As one embodiment, a wireless link between the UE 201 and the gNB 203 comprises a cellular network link.

As one embodiment, the UE 201 and the gNB 203 are connected via a Uu air interface.

As one embodiment, a sender of the first information block comprises the gNB 203.

As one embodiment, a recipient of the first information block comprises the UE 201.

As one embodiment, a sender of the random access preamble comprises the UE 201.

As one embodiment, a recipient of the random access preamble comprises the gNB 203.

As one embodiment, the gNB 203 supports SBFD.

As one embodiment, the gNB 203 supports a more flexible duplex mode or a full-duplex mode.

As one embodiment, the UE 201 supports SBFD.

As one embodiment, the UE 201 supports a more flexible duplex mode or a full-duplex mode.

## Embodiment 3

Embodiment 3 illustrates a schematic diagram of one embodiment of a wireless protocol architecture of a user plane and a control plane according to one embodiment of the present application, as shown in FIG. 3.

FIG. 3 is a schematic diagram illustrating an embodiment of a radio protocol architecture for a user plane 350 and a control plane 300, and FIG. 3 shows a radio protocol architecture for the control plane 300 between a first communication node device (a road side unit (RSU) in UE or vehicle to everything (V2X), a vehicle-mounted device or a vehicle-mounted communication module) and a second node device (a gNB, an RSU in UE or V2X, a vehicle-mounted device or a vehicle-mounted communication module), or between two pieces of UE using three layers: Layer 1 (L1), Layer 2 (L2) and Layer 3 (L3). L1 is the lowest layer and implements various PHY (PHYsical layer) signal processing functions. L1 will be referred to as PHY 301 herein. L2 305 is above the PHY 301 and is responsible for links between a first node device and a second node device or between two pieces of UE through the PHY 301. L2 305 comprises a MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels.

The PDCP sublayer 304 also provides security by encrypting data packets and provides handover support for the first communication node device between second communication node devices. The RLC sublayer 303 provides segmentation and reassembly of upper layer data packets, retransmission of lost data packets, and reordering of data packets to compensate for out-of-order reception due to HARQ (Hybrid Automatic Repeat reQuest process number). The MAC sublayer 302 provides multiplexing between logical and transport channels. The MAC sublayer 302 is also responsible for allocating various radio resources (e.g., resource blocks) in one cell between first communication node devices. The MAC sublayer 302 is also responsible for HARQ operations. The RRC (Radio Resource Control) sublayer 306 in L3 of the control plane 300 is responsible for acquiring radio resources (i.e., radio bearers) and configuring lower layers using RRC signaling between the second communication node device and the first communication node device. The radio protocol architecture for the user plane 350 comprises Layer 1 (L1) and Layer 2 (L2). The radio protocol architecture for the first communication node device and the second communication node device in the user plane 350 is substantially the same as the corresponding layers and sublayers in the control plane 300 as for a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce the radio transmission overhead. L2 355 in the user plane 350 also comprises an service data adaptation protocol (SDAP) sublayer 356, and the SDAP sublayer 356 is responsible for mapping between quality of service (QoS) flows and data radio bearers (DRBs) to support the diversity of services. Although not shown, the first communication node device may have several upper layers above L2 355, including a network layer (e.g., IP (Internet Protocol) layer) terminating at the P-GW on the network side and an application layer terminating at the other end of the connection (e.g., remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block is generated at the RRC 306.

As one embodiment, the first information block is generated at the MAC sublayer 302 or MAC sublayer 352.

As one embodiment, the first information block is generated at the PHY 301 or PHY 351.

As one embodiment, the random access preamble is generated at the PHY 301 or PHY 351.

As one embodiment, the higher layer in the present application refers to a layer above the physical layer.

As one embodiment, the higher layer in the present application comprises the MAC layer.

As one embodiment, the higher layer in the present application comprises the RRC layer.

## Embodiment 4

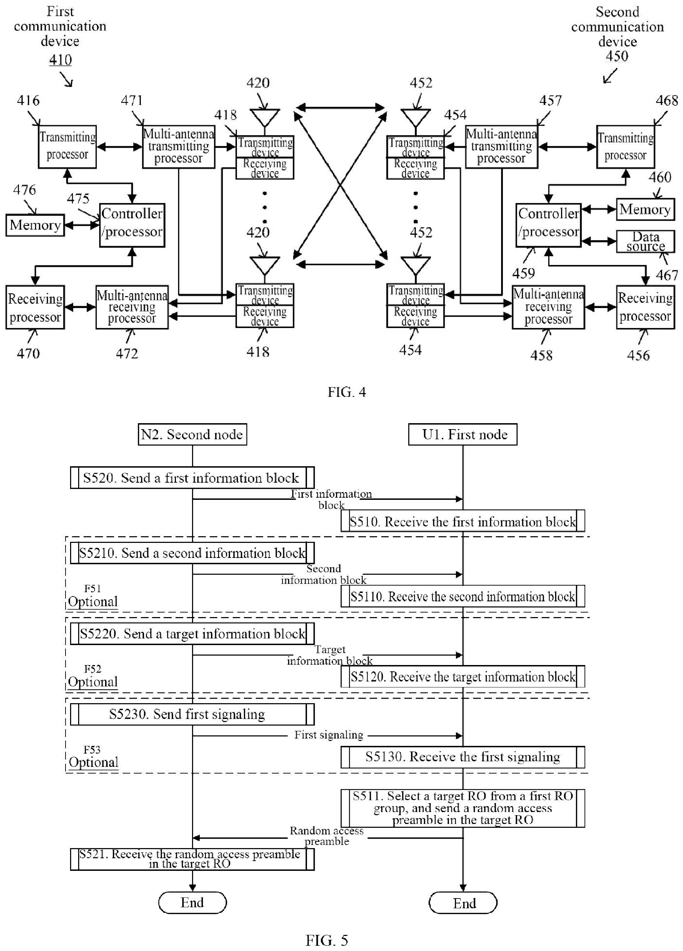

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In transmission from the first communication device 410 to the second communication device 450, at the first communication device 410, upper layer data packets from a core network are provided to a controller/processor 475. The controller/processor 475 implements functionality of L2. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for L1 (i.e., physical layer). The transmitting processor 416 implements coding and interleaving to facilitate forward error correction (FEC) at the second communication device 450, as well as mapping of signal constellations based on various modulation schemes (e.g., binary phase shift keying (BPSK), quadrature phase shift keying (QPSK), M-ary phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses inverse fast Fourier transform (IFFT) to generate a physical channel carrying a time domain multi-carrier symbol stream. The multi-antenna transmitting processor 471 then performs a sending analogue precoding/beamforming operation on the time domain multi-carrier symbol stream. Each transmitting device 418 converts a baseband multi-carrier symbol stream provided by the multi-antenna transmitting processor 471 into a radio frequency stream, and then provides it to a different antenna 420.

In transmission from the first communication device 410 to the second communication device 450, at the second communication device 450, each receiving device 454 receives a signal through its corresponding antenna 452. Each receiving device 454 recovers information modulated onto a radio frequency carrier and converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 performs a receiving analog precoding/beamforming operation on the baseband multi-carrier symbol stream from the receiving device 454. The receiving processor 456 uses fast Fourier transform (FFT) to convert the baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for a channel estimation, and the data signal is recovered after multi-antenna detection in the multi-antenna receiving processor 458 into any parallel stream destined for the second communication device 450. Symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements functions of L2. The controller/processor 459 may be associated with a memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover upper layer data packets from the core network. The upper layer data packets are then provided to all protocol layers above L2. Various control signals may also be provided to the L3 for L3 processing. The controller/processor 459 is also responsible for error detection using an Acknowledgement (ACK) and/or Negative Acknowledgement (NACK) protocol to support the HARQ operations.

In transmission from the second communication device 450 to the first communication device 410, at the second communication device 450, the data source 467 is used to provide upper layer data packets to the controller/processor 459. The data source 467 represents all protocol layers above L2. Similar to transmission function at the first communication device 410 described in a DL, the controller/processor 459 implements header compression, encryption, packet segmentation and reordering, and multiplexing between logical and transport channels based on wireless resource allocation of the first communication device 410, and implements L2 functions for the user plane and the control plane. The controller/processor 459 is also responsible for HARQ operations, retransmission of lost packets, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts a baseband symbol stream provided by the multi-antenna transmitting processor 457 into a radio frequency symbol stream, and then provides it to the antenna 452.

In transmission from the second communication device 450 to the first communication device 410, functions at the first communication device 410 are similar to receiving functions at the second communication device 450 described in transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of L1. The controller/processor 475 implements functions of L2. The controller/processor 475 may be associated with the memory 476 storing program codes and data. The memory 476 may be referred to as a computer-readable medium. The controller/processor 475 provides demultiplexing between transport and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support the HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least receives a first information block, the first information block indicating a first symbol set; selects a target RO from a first RO group, and sends a random access preamble in the target RO; the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the second communication device 450 comprises: a memory storing a computer-readable instruction program, the computer-readable instruction program, when executed by at least one processor, causing actions including: receiving a first information block; selecting a target RO from a first RO group, and sending a random access preamble in the target RO.

As one embodiment, the first communication device 410 comprises: at least one processor and at least one memory, the at least one memory comprising computer program code; and the at least one memory and the computer program code are configured to be used together with the at least one processor. The first communication device 410 apparatus at least sends a first information block, the first information block indicating a first symbol set; receives a random access preamble in a target RO; a recipient of the first information block selects the target RO from a first RO group; the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the first communication device 410 comprises: a memory storing a computer-readable instruction program, the computer-readable instruction program, when executed by at least one processor, causing actions including: sending a first information block; receiving a random access preamble in a target RO.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, and the memory 476} is used for sending a first information block; at least one of {the antenna 452, the receiving device 454, the receiving processor 456, the multi-antenna receiving processor 458, the controller/processor 459, the memory 460, and the data source 467} is used to receive the first information block.

As one embodiment, at least one of {the antenna 452, the transmitting device 454, the transmitting processor 468, the multi-antenna transmitting processor 457, the controller/processor 459, the memory 460, and the data source 467} is used to select a target RO from a first RO group and send a random access preamble in the target RO; at least one of { the antenna 420, the receiving device 418, the receiving processor 470, the multi-antenna receiving processor 472, the controller/processor 475, and the memory 476} is used to receive the random access preamble in the target RO.

**Embodiment 5**

Embodiment 5 illustrates a flowchart of transmission between a first node and a second node according to one embodiment of the present application. In FIG. 5, a first node U1 and a second node N2 communicate via a wireless link. The steps in block F51, block F52, and block F53 are respectively optional. It is particularly noted that the order in this embodiment does not limit the signal transmission order and implementation order in the present application.

For **the first node U1,** it can in step S510, receive a first information block; in step S5110, receive a second information block; in step S5120, receive a target information block; in step S5130, receive first signaling; in step S511, select a target RO from a first RO group, and send a random access preamble in the target RO.

For **the second node N2,** it can in step S520, send the first information block; in step S5210, send the second information block; in step S5220, send the target information block; in step S5230, send the first signaling; in step S521, receive the random access preamble in the target RO.

In Embodiment 5, the first information block indicates a first symbol set; the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the steps in block F51 in FIG. 5 exist; and the method applied to the first node in the present application comprises: receiving a second information block.

As one embodiment, the second information block indicates a first RO set; and each RO in the first RO set is mapped to the first SSB index, and there is at least one RO among the ROs included in the first RO group that belongs to the first RO set.

As one embodiment, the second information block is carried by higher layer signaling.

As one embodiment, the second information block is carried by RRC signaling.

As one embodiment, the second information block comprises information in at least one RRC IE.

As one embodiment, the second information block comprises some or all fields of one RRC IE.

As one embodiment, the second information block comprises some or all fields of each RRC IE among a plurality of RRC IEs.

As one embodiment, the first information block comprises some or all fields included in an SIB1.

As one embodiment, the second information block comprises some or all fields in the *RACH-Config-Common* IE.

As one embodiment, the second information block comprises some or all fields in the *RACH-Config-Dedicated* IE.

As one embodiment, the second information block comprises some or all fields in the *RACH-Config-Generic* IE.

As one embodiment, the second information block comprises some or all fields in the *RACH-Config-CommonTwoStepRA* IE.

As one embodiment, the second information block comprises some or all fields in the *RACH-Config-GenericTwoStepRA* IE.

As one embodiment, the second information block indicates the number of ROs included in the first RO set.

As one embodiment, the second information block indicates time domain information of an RO configured for the first node.

As one embodiment, the second information block indicates a PRACH configuration index, the PRACH configuration index indicating time domain information of an RO configured for the first node.

As one sub-embodiment of this embodiment, the one PRACH configuration index indicates one row of a random access configuration table, the one row of the random access configuration table indicating a random access preamble format, a PRACH configuration period, an offset of the PRACH configuration period, a subframe number where ROs are located, the number of PRACH slots included in one subframe, the number of time-division multiplexing of an RO in one PRACH slot, and the number of symbols occupied by one RO; the PRACH configuration period, the offset of the PRACH configuration period, the subframe number where ROs are located, the number of PRACH slots included in one subframe, and the number of time-division multiplexing of the RO in one PRACH slot jointly indicate the time domain information of ROs configured for the first node U1.

As one embodiment, the second information block indicates frequency domain information of ROs configured for the first node U1.

As one sub-embodiment of this embodiment, the second information indicates an RO frequency domain start position, the number of RBs occupied in the frequency domain, and the number of frequency division multiplexing; the RO frequency domain start position, the number of RBs occupied in the frequency domain, and the number of frequency division multiplexing jointly indicate the frequency domain information of ROs configured for the first node.

As one embodiment, the second information block indicates the number of SSBs that one RO can be mapped to.

As one embodiment, the time domain information of ROs configured for the first node U1, the frequency domain information of ROs configured for the first node, and the number of SSBs that one RO can be mapped to jointly indicate the ROs in the first RO set.

As one embodiment, the second information block explicitly indicates the first RO set.

As one embodiment, the second information block implicitly indicates the first RO set.

As one embodiment, the second information block configures the first RO set.

As one embodiment, the second information block indicates time domain resources occupied by any RO in the first RO set.

As one embodiment, the second information block indicates frequency domain resources occupied by any RO in the first RO set.

As one embodiment, the second information block indicates code-domain resources occupied by any RO in the first RO set.

As one sub-embodiment of this embodiment, the code-domain resources comprise preambles.

As one sub-embodiment of this embodiment, the code-domain resources comprise orthogonal sequences.

As one embodiment, the steps in block F51 in FIG. 5 do not exist.

As one embodiment, the steps in block F52 in FIG. 5 exist; and the method applied to the first node in the present application comprises: receiving a target information block.

As one embodiment, the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

As one embodiment, the target information block is carried by higher layer signaling.

As one embodiment, the target information block is carried by RRC signaling.

As one embodiment, the target information block comprises information in at least one RRC IE.

As one embodiment, the target information block comprises some or all fields of one RRC IE.

As one embodiment, the target information block comprises some or all fields of each RRC IE among multiple RRC IEs.

As one embodiment, the target information block comprises some or all fields of one SIB1.

As one embodiment, the name of the RRC signaling carrying the target information block comprises "SIB".

As one embodiment, the name of the RRC signaling carrying the target information block comprises "SBFD".

As one embodiment, the name of the RRC signaling carrying the target information block comprises "Config".

As one embodiment, the name of the RRC signaling carrying the target information block comprises "RACH".

As one embodiment, the name of the RRC signaling carrying the target information block comprises "RA".

As one embodiment, the name of the RRC signaling carrying the target information block comprises "Generic".

As one embodiment, the name of the RRC signaling carrying the target information block comprises "Common".

As one embodiment, the name of the RRC signaling carrying the target information block comprises "Dedicated".

As one embodiment, the name of the RRC signaling carrying the target information block comprises "TwoStep".

As one embodiment, a recipient of the target information block does not comprise legacy UE.

As one embodiment, the target information block is unavailable for legacy UE.

As one embodiment, the target information block implicitly indicates whether the first symbol set is used for random access.

As one embodiment, the target information block explicitly indicates whether the first symbol set is used for random access.

As one embodiment, the target information block configures an RO in the first symbol set.

As one embodiment, the target information block configures only an RO in the first symbol set.

As one embodiment, the target information block indicates that an RO in the first symbol set can be used for sending a random access preamble.

As one embodiment, the target information block indicates that an RO in the first symbol set cannot be used for sending a random access preamble.

As one embodiment, the target information block indicates that an RO in the first symbol set can be used for sending a random access preamble when a given condition is met.

As one sub-embodiment of this embodiment, the given condition comprises: maximum transmission power.

As one sub-embodiment of this embodiment, the given condition comprises: priority rules.

As one sub-embodiment of this embodiment, the given condition comprises: UE processing time requirements.

As one sub-embodiment of this embodiment, a benefit of the above method is: the first node U1 can judge based on actual conditions whether ROs in the first symbol set can be used for sending random access preambles, and can flexibly adapt to different environments and better handle cross-link interference.

As one embodiment, the target information block is used for determining an RO in the non-legacy SSB-RO mapping cycle in the present application that is associated with the first SSB index.

As one embodiment, the target information block is used for indicating an RO in the non-legacy SSB-RO mapping cycle in the present application that is associated with the first SSB index.

As one embodiment, the target information block is used for indicating ROs in the non-legacy SSB-RO mapping cycle in the present application that are associated with all SSB indices.

As one sub-embodiment of this embodiment, when the first symbol set is used for random access, an RO in the first symbol set included in the first RO group belongs to ROs in the non-legacy SSB-RO mapping cycle in the present application that are associated with the first SSB index.

As one embodiment, the non-legacy SSB-RO mapping cycle is an SSB-RO mapping cycle for Rel-18.

As one embodiment, the non-legacy SSB-RO mapping cycle is an SSB-RO mapping cycle for Rel-18 and later releases.

As one embodiment, the non-legacy SSB-RO mapping cycle is an SSB-RO mapping cycle for Rel-19 and later releases.

As one embodiment, the non-legacy SSB-RO mapping cycle is invisible to Rel-11 and earlier releases.

As one embodiment, the non-legacy SSB-RO mapping cycle is unavailable to Rel-11 and earlier releases.

As one embodiment, the steps in block F52 in FIG. 5 do not exist.

As one sub-embodiment of this embodiment, whether the first symbol set is used for random access is default.

As one sub-embodiment of this embodiment, whether the first symbol set is used for random access is predefined.

As one sub-embodiment of this embodiment, whether the first symbol set is used for random access is implementation-related.

As one embodiment, the steps in block F53 in FIG. 5 exist; and the method applied to the first node in the present application comprises: receiving first signaling.

As one embodiment, the first signaling indicates a first PRACH mask index value; and among ROs in the one SSB-RO mapping cycle that are associated with the first SSB index, only an RO indicated by the first PRACH mask index value belongs to the first RO group.

As one embodiment, the PRACH mask index value refers to: a PRACH mask index value.

As one embodiment, the first signaling is higher layer signaling.

As one embodiment, the first signaling is RRC layer signaling.

As one embodiment, the first signaling comprises at least one RRC IE.

As one embodiment, the first signaling comprises some or all fields of one RRC IE.

As one embodiment, the first signaling comprises some or all fields of each RRC IE among multiple RRC IEs.

As one embodiment, the first signaling comprises some or all fields of a *ReconfigurationWithSync* IE.

As one embodiment, the first signaling comprises some or all fields in the *RACH-ConfigDedicated* IE.

As one embodiment, the first signaling comprises some or all fields in the *CFRA* IE.

As one embodiment, the first signaling comprises some or all fields in the *CFRA-TwoStep* IE.

As one embodiment, the first signaling comprises some or all fields in the *SI-RequestConfig* IE.

As one embodiment, the first signaling comprises some or all fields in the *SI-RequestResources* IE.

As one embodiment, the first signaling comprises the *ra-ssb-OccasionMaskIndex* field.

As one embodiment, the first signaling is layer 1 (L1) signaling.

As one embodiment, the first signaling is physical layer signaling.

As one embodiment, the first signaling is a PDCCH (Physical Downlink Control CHannel) order.

As one embodiment, the first signaling is an enhanced PDCCH order.

As one embodiment, the first signaling comprises one or more fields included in one piece of DCI.

As one embodiment, the first signaling is DCI, and the format of the DCI is DCI format 0_1.

As one embodiment, the first signaling is DCI, the DCI comprises a Random Access Preamble index field, and the Random Access Preamble index field included in the DCI is not zero.

As one embodiment, the first signaling is DCI, the DCI comprises a Frequency domain resource assignment field, and the Frequency domain resource assignment field included in the DCI is set to all 1.

As one embodiment, the first signaling triggers the first node U1 to send the random access preamble in the target RO.

As one embodiment, the first signaling indicates the first PRACH mask index value.

As one embodiment, the first signaling is RRC signaling, the RRC signaling comprises the *ra-ssb-OccasionMaskIndex* field, and the *ra-ssb-OccasionMaskIndex* field included in the RRC signaling indicates the first PRACH mask index value.

As one embodiment, the first signaling is DCI, the DCI comprises a PRACH mask index field, and the PRACH mask index field included in the DCI indicates the first PRACH mask index value.

As one embodiment, the first signaling indicates the first SSB index.

As one embodiment, the first signaling is RRC signaling, the RRC signaling comprises the *ssb* field in the *CFRA-SSB-Resource* IE, and the *ssb* field in the *CFRA-SSB-Resource* IE included in the RRC signaling indicates the first SSB index.

As one embodiment, the first signaling is DCI, the DCI comprises an SS/PBCH index field, and the SS/PBCH index field included in the DCI indicates the first SSB index.

As one embodiment, the first signaling indicates an index value of the random access preamble in the target RO.

As one embodiment, the first signaling is RRC signaling, the RRC signaling comprises the *ra-PreambleIndex* field in the *CFRA-SSB-Resource* IE, and the *ra-PreambleIndex* field in the *CFRA-SSB-Resource* IE included in the RRC signaling indicates the index value of the random access preamble sent in the target RO.

As one embodiment, the first signaling is DCI, the DCI comprises a Random Access Preamble index field, and the Random Access Preamble index field included in the DCI indicates the index value of the random access preamble sent in the target RO.

As one embodiment, the first signaling is DCI, the one SSB-RO mapping cycle in the present application refers to the first available SSB-RO mapping cycle after the first node U1 decodes the first signaling.

As one embodiment, the steps in block F53 in FIG. 5 do not exist.

As one sub-embodiment of this embodiment, the first node U1 sending the random access preamble in the target RO is triggered by the RRC layer or MAC entity.

As one sub-embodiment of this embodiment, the first node U1 sending the random access preamble in the target RO is not triggered by a PDCCH order.

As one sub-embodiment of this embodiment, the first node U1 sending the random access preamble in the target RO is for CBRA.

As one embodiment, blocks F51, F51, and F53 in FIG. 5 do not exist, step S510 is before step S511, and step S520 is before step S521.

As one embodiment, the steps in block F51 in FIG. 5 exist, step S5210 is before step S521, and step S5110 is before step S511.

As one sub-embodiment of this embodiment, step S5210 is before step S520, and step S5110 is before step S510.

As one sub-embodiment of this embodiment, step S5210 is after step S520, and step S5110 is after step S510.

As one sub-embodiment of this embodiment, the first information block and the second information block both comprise RRC signaling, the first information block and the second information block comprise different fields of the same RRC IE, step S5210 and step S520 occur simultaneously, and step S5110 and step S510 occur simultaneously.

As one embodiment, the steps in block F52 in FIG. 5 exist, step S5220 is before step S521, and step S5120 is before step S511.

As one sub-embodiment of this embodiment, step S5220 is before step S520, and step S5120 is before step S510.

As one sub-embodiment of this embodiment, step S5220 is after step S520, and step S5120 is after step S510.

As one sub-embodiment of this embodiment, the first information block and the target information block both comprise RRC signaling, the first information block and the target information block comprise different fields of the same RRC IE, step S5220 and step S520 occur simultaneously, and step S5120 and step S510 occur simultaneously.

As one embodiment, the steps in block F53 in FIG. 5 exist, step S5230 is before step S521, and step S5130 is before step S511.

As one sub-embodiment of this embodiment, step S5230 is before step S520, and step S5130 is before step S510.

As one sub-embodiment of this embodiment, step S5230 is after step S520, and step S5130 is after step S510.

As one sub-embodiment of this embodiment, the first information block and the first signaling both comprise RRC signaling, the first information block and the first signaling comprise different fields of the same RRC IE, step S5230 and step S520 occur simultaneously, and step S5130 and step S510 occur simultaneously.

As one embodiment, the steps in blocks F51 and F52 in FIG. 5 exist simultaneously, step S5210 and step S5220 are both before step S521; step S5110 and step S5120 are both before step S511.

As one embodiment, the steps in blocks F51 and F53 in FIG. 5 exist simultaneously, step S5210 and step S5230 are both before step S521; step S5110 and step S5130 are both before step S511.

As one embodiment, the steps in blocks F52 and F53 in FIG. 5 exist simultaneously, step S5220 and step S5230 are both before step S521; step S5120 and step S5130 are both before step S511.

As one embodiment, the steps in blocks F52, F52, and F53 in FIG. 5 exist simultaneously, step S5210, step S5220, and step S5230 are all before step S521; step S5110, step S5120, and step S5130 are all before step S511.

As one embodiment, the first information block is transmitted on a downlink physical control channel (i.e., a downlink channel that can only be used to carry physical layer control signaling).

As one embodiment, the physical layer channel occupied by the first information block comprises a PDCCH.

As one embodiment, the first information block is transmitted on a downlink physical data channel (i.e., a downlink channel that can be used to carry physical layer data).

As one embodiment, the physical layer channel occupied by the first information block comprises a PDSCH.

As one embodiment, the transport channel occupied by the first information block comprises a DL-SCH (DownLink-Shared CHannel).

As one embodiment, the second information block is transmitted on a downlink physical data channel (i.e., a downlink channel that can be used to carry physical layer data).

As one embodiment, the physical layer channel occupied by the second information block comprises a PDSCH.

As one embodiment, the transport channel occupied by the second information block comprises a DL-SCH.

As one embodiment, the target information block is transmitted on a downlink physical data channel (i.e., a downlink channel that can be used to carry physical layer data).

As one embodiment, the physical layer channel occupied by the target information block comprises a PDSCH.

As one embodiment, the transport channel occupied by the target information block comprises a DL-SCH.

As one embodiment, the first signaling is transmitted on a downlink physical control channel (i.e., a downlink channel that can only be used to carry physical layer control signaling).

As one embodiment, the physical layer channel occupied by the first signaling comprises a PDCCH.

As one embodiment, the first signaling is transmitted on a downlink physical data channel (i.e., a downlink channel that can be used to carry physical layer data).

As one embodiment, the physical layer channel occupied by the first signaling comprises a PDSCH.

As one embodiment, the random access preamble sent in the target RO occupies a physical layer channel including a PRACH.

## Embodiment 6

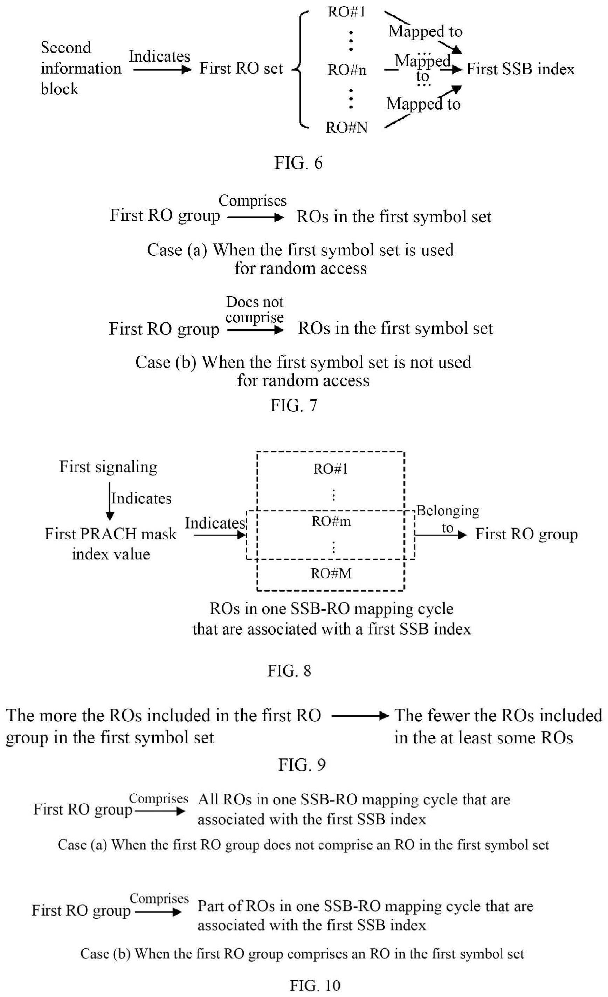

Embodiment 6 illustrates a schematic diagram of the relationship between ROs in a first RO set and a first SSB index according to one embodiment of the present application, as shown in FIG. 6. In FIG. 6, the second information block indicates a first RO set; each RO in the first RO set is mapped to the first SSB index; the ROs included in the first RO set are denoted as: RO#1, ..., RO#n, ..., RO#N; N is a positive integer greater than 1.

In Embodiment 6, there is at least one RO among the ROs included in the first RO group that belongs to the first RO set.

As one embodiment, the first RO set comprises a positive integer number of ROs greater than 1.

As one embodiment, the meaning of the feature "each RO in the first RO set is mapped to the first SSB index" comprises: each RO in the first RO set is associated with the first SSB index.

As one embodiment, the meaning of the feature "each RO in the first RO set is mapped to the first SSB index" comprises: each RO in the first RO set is only associated with the first SSB index.

As one embodiment, the meaning of the feature "each RO in the first RO set is mapped to the first SSB index" comprises: each RO in the first RO set corresponds to the first SSB index.

As one embodiment, the meaning of the feature "each RO in the first RO set is mapped to the first SSB index" comprises: each RO in the first RO set only corresponds to the first SSB index.

As one embodiment, the meaning of the feature "each RO in the first RO set is mapped to the first SSB index" comprises: each RO in the first RO set is mapped to the first SSB index.

As one embodiment, the meaning of the feature "each RO in the first RO set is mapped to the first SSB index" comprises: each RO in the first RO set is only mapped to the first SSB index.

As one embodiment, the meaning of the feature "each RO in the first RO set is mapped to the first SSB index" comprises: each RO in the first RO set can be used for sending a preamble associated with the first SSB index.

As one embodiment, the meaning of the feature "each RO in the first RO set is mapped to the first SSB index" comprises: each RO in the first RO set can only be used for sending a preamble associated with the first SSB index.

As one embodiment, the meaning of the feature "each RO in the first RO set is mapped to the first SSB index" comprises: the first SSB index is mapped to each RO in the first RO set.

As one embodiment, any RO among the ROs included in the first RO group belongs to the first RO set.

As one embodiment, the first RO group is one subset of the first RO set.

As one embodiment, the first RO group is one true subset of the first RO set.

As one embodiment, the first RO set corresponds to ROs mapped to the first SSB index within one association period in the present application, and the first RO group belongs to ROs in one SSB-RO mapping cycle included in the association period.

As one embodiment, the first RO set corresponds to ROs mapped to the first SSB index within one association pattern period, and the ROs included in the first RO group belong to ROs in one association period included in the association pattern period.

As one embodiment, the first RO set corresponds to ROs mapped to the first SSB index within one association pattern period, and the ROs included in the first RO group belong to ROs associated with the first SSB index within one association period included in the one association pattern period.

As one embodiment, the first RO set corresponds to ROs mapped to the first SSB index within one association pattern period, and the ROs included in the first RO group belong to ROs associated with the first SSB index within one SSB-RO mapping cycle included in the one association pattern period.

As one embodiment, one association pattern period in the present application does not exceed 160ms.

As one embodiment, one association pattern period in the present application comprises at least one association period in the present application.

As one embodiment, one association pattern period in the present application refers to a time domain repetition period of association cycles where SSB indices are mapped to ROs.

## Embodiment 7

Embodiment 7 illustrates a schematic diagram of the relationship between a first symbol set and a first RO group according to one embodiment of the present application, as shown in FIG. 7. In FIG. 7, case (a) indicates that when the first symbol set is used for random access, the first RO group comprises an RO in the first symbol set; case (b) indicates that when the first symbol set is not used for random access, the first RO group does not comprise an RO in the first symbol set.

As one embodiment, the meaning of the feature "the first symbol set is used for random access" comprises: ROs are configured on the symbols included in the first symbol set.

As one embodiment, the meaning of the feature "the first symbol set is used for random access" comprises: ROs configured on the symbols included in the first symbol set are valid ROs.

As one embodiment, the meaning of the feature "the first symbol set is used for random access" comprises: when the time domain resources occupied by ROs configured for the first node overlap with the first symbol set, the ROs configured for the first node are valid ROs.

As one embodiment, the meaning of the feature "the first symbol set is used for random access" comprises: an RO on the first symbol set can be mapped to one SSB index in one SSB-RO cyclic mapping.

As one embodiment, the meaning of the feature "the first symbol set is not used for random access" comprises: no ROs are configured on the symbols included in the first symbol set.

As one embodiment, the meaning of the feature "the first symbol set is not used for random access" comprises: ROs configured on the symbols included in the first symbol set are not valid ROs.

As one embodiment, the meaning of the feature "the first symbol set is not used for random access" comprises: when the time domain resources occupied by ROs configured for the first node overlap with the first symbol set, the ROs configured for the first node are not valid ROs.

As one embodiment, the meaning of the feature "the first symbol set is not used for random access" comprises: ROs on the first symbol set cannot be mapped to one SSB index in one SSB-RO cyclic mapping.

As one embodiment, when the first symbol set is used for random access, the first RO group comprises an RO in the first symbol set; when the first symbol set is not used for random access, the first RO group does not comprise an RO in the first symbol set.

As one embodiment, when the first symbol set is used for random access, the first RO group comprises an RO in the first symbol set and an RO outside the first symbol set; when the first symbol set is not used for random access, the first RO group only comprises an RO outside the first symbol set.

As one sub-embodiment of this embodiment, an RO in the first symbol set is mapped to the first SSB index.

## Embodiment 8

Embodiment 8 illustrates a schematic diagram of the relationship between a first PRACH mask index value and a first RO group according to one embodiment of the present application, as shown in FIG. 8. In FIG. 8, first signaling indicates a first PRACH mask index value; among the ROs in one SSB-RO mapping cycle that are associated with a first SSB index, only an RO indicated by the first PRACH mask index value belongs to the first RO group. ROs in the one SSB-RO mapping cycle that are associated with the first SSB index are denoted as RO#1, ..., RO#m, ..., RO#M, where M is a positive integer greater than 1.

As one embodiment, the first signaling indicates a first PRACH mask index value; among the ROs in the one SSB-RO mapping cycle that are associated with the first SSB index, only an RO indicated by the first PRACH mask index value belongs to the first RO group.

As one embodiment, the first PRACH mask index value indicates at least one RO.

As one embodiment, the first PRACH mask index value indicates at least one RO.

As one embodiment, the first PRACH mask index value indicates all ROs among the ROs in the one SSB-RO mapping cycle that are associated with the first SSB index.

As one embodiment, the first PRACH mask index value indicates some ROs among the ROs in the one SSB-RO mapping cycle that are associated with the first SSB index.

As one embodiment, the first SSB index is associated with L1 RO groups, ROs in any RO group of the L1 RO groups are ordered, and the first RO group comprises ROs indicated by the first PRACH mask index value in any RO group of the L1 RO groups.

As one sub-embodiment of this embodiment, L1 is equal to 1.

As one sub-embodiment of this embodiment, L1 is greater than 1.

As one sub-embodiment of this embodiment, there are two RO groups among the L1 RO groups that comprise overlapping ROs.

As one sub-embodiment of this embodiment, there are two RO groups among the L1 RO groups that comprise orthogonal ROs.

As one sub-embodiment of this embodiment, there are two RO groups among the L1 RO groups that comprise the same number of ROs.

As one sub-embodiment of this embodiment, there are two RO groups among the L1 RO groups that comprise different numbers of ROs.

As one sub-embodiment of this embodiment, the number of ROs included in any RO group of the L1 RO groups is not greater than 8.

As one sub-embodiment of this embodiment, the first mask index value indicates one RO group among the L1 RO groups.

As one sub-embodiment of this embodiment, all ROs included in the L1 RO groups belong to ROs in the one SSB-RO mapping cycle that are associated with the first SSB index.

As one sub-embodiment of this embodiment, all ROs included in the L1 RO groups belong to ROs associated with the first SSB index within one association period.

As one embodiment, the ROs in the one SSB-RO mapping cycle that are associated with the first SSB index are M ROs, M is a positive integer greater than 1, the M ROs are indexed according to a given order, and the ROs among the M ROs whose index modulo a given integer yields a remainder corresponding to the first PRACH mask index value belong to the first RO group.

As one sub-embodiment of this embodiment, the given integer is fixed, or the given integer is configured via higher layer signaling.

As one sub-embodiment of this embodiment, the given integer depends on the association period in the present application.

As one sub-embodiment of this embodiment, the given integer equals Y1 in Embodiment 9 of the present application.

As one sub-embodiment of this embodiment, the given integer equals W1 in Embodiment 9 of the present application.

As one sub-embodiment of this embodiment, the given order index is indexed in ascending order of frequency domain resources first and then in ascending order of time domain resources.

As one sub-embodiment of this embodiment, the given order index is indexed in ascending order of time domain resources first and then in ascending order of frequency domain resources.

## Embodiment 9

Embodiment 9 illustrates a schematic diagram of the relationship between the number of ROs included in at least some ROs and the number of ROs included in a first RO group according to one embodiment of the present application, as shown in FIG. 9. In FIG. 9, the more the ROs included in the first RO group in the first symbol set, the fewer the ROs included in the at least some ROs.

As one embodiment, the more the ROs included in the first RO group in the first symbol set, the fewer the ROs included in the at least some ROs.

As one embodiment, the number of ROs included in the first RO group equals Y1, where Y1 is a positive integer greater than 1.

As one sub-embodiment of this embodiment, Y1 is fixed, or Y1 is configured via higher layer signaling.

As one sub-embodiment of this embodiment, Y1 depends on the one association period in the present application.

As one sub-embodiment of this embodiment, Y1 is the number of all ROs associated with the first SSB index in one SSB-RO mapping cycle when the first RO group does not comprise an RO in the first symbol set.

As one sub-embodiment of this embodiment, the number of ROs in the first symbol set that the first RO group comprises plus the number of ROs included in the at least some ROs equals Y1.

As one embodiment, the number of ROs in the first symbol set that the first RO group comprises equals Y2, where Y2 is a positive integer greater than 1; the number of ROs included in the at least some ROs depends on Y2.

As one sub-embodiment of this embodiment, the number of ROs included in the at least some ROs equals the difference between a first integer and Y2 multiplied by 2, where the first integer is an integer greater than Y2.

As one sub-embodiment of this embodiment, the number of ROs included in the at least some ROs equals the difference between a first integer and the product of 0.5 and Y2, where Y2 is an even number greater than 1, and the first integer is an integer greater than the product of 0.5 and Y2.

As one sub-embodiment of this embodiment, the first integer is predefined, or the first integer is configured via higher layer signaling.

As one sub-embodiment of this embodiment, the first integer depends on the one association period in the present application.

## Embodiment 10

Embodiment 10 illustrates a schematic diagram of the relationship between at least some ROs and whether a first RO group comprises an RO in a first symbol set according to one embodiment of the present application, as shown in FIG. 10. In FIG. 10, case (a) indicates that when the first RO group does not comprise an RO in the first symbol set, the first RO group comprises all ROs associated with the first SSB index in one SSB-RO mapping cycle; case (b) indicates that when the first RO group comprises an RO in the first symbol set, the first RO group comprises some ROs associated with the first SSB index in one SSB-RO mapping cycle.

As one embodiment, when the first RO group does not comprise an RO in the first symbol set, the first RO group comprises all ROs associated with the first SSB index in one SSB-RO mapping cycle; when the first RO group comprises an RO in the first symbol set, the first RO group comprises some ROs associated with the first SSB index in one SSB-RO mapping cycle, and ROs in a target RO set, where the target RO set comprises ROs other than all ROs associated with the first SSB index in one SSB-RO mapping cycle.

As one sub-embodiment of this embodiment, the ROs in the target RO set are associated with the first SSB index.

As one sub-embodiment of this embodiment, the number of all ROs associated with the first SSB index in one SSB-RO mapping cycle equals W1, the number of some ROs associated with the first SSB index in one SSB-RO mapping cycle included in the first RO group equals W2, the number of ROs in the target RO set equals W3, W1 is a positive integer greater than 1, W2 is a positive integer, W3 is a positive integer, and W1 equals the sum of W2 and W3.

As one auxiliary embodiment of this sub-embodiment, W1 is predefined.

As one auxiliary embodiment of this sub-embodiment, W1 is indicated via RRC signaling.

As one embodiment, when the first RO group comprises an RO in the first symbol set, the first RO group comprises some ROs associated with the first SSB index in one SSB-RO mapping cycle, and ROs in a target RO set, where the target RO set comprises ROs other than all ROs associated with the first SSB index in one SSB-RO mapping cycle.

As one sub-embodiment of this embodiment, the number of some ROs associated with the first SSB index in one SSB-RO mapping cycle included in the first RO group equals W2, and the number of ROs in the target RO set equals W3; some ROs are the smallest W2 ROs according to RO index order among all ROs associated with the first SSB index in one SSB-RO mapping cycle; the ROs in the target RO set are the smallest W3 ROs according to RO index order among all ROs associated with the first SSB index and located within one SSB-RO mapping cycle and occupying the first symbol set; W2 is a positive integer, and W3 is a positive integer.

As one embodiment, the ROs included in the target RO set in the present application are located within a time window corresponding to the one SSB-RO mapping cycle.

As one embodiment, the ROs included in the target RO set in the present application do not belong to ROs in the one SSB-RO mapping cycle that are associated with the first SSB index.

As one embodiment, the ROs included in the target RO set in the present application belong to ROs associated with the first SSB index in a non-legacy SSB-RO mapping cycle.

## Embodiment 11

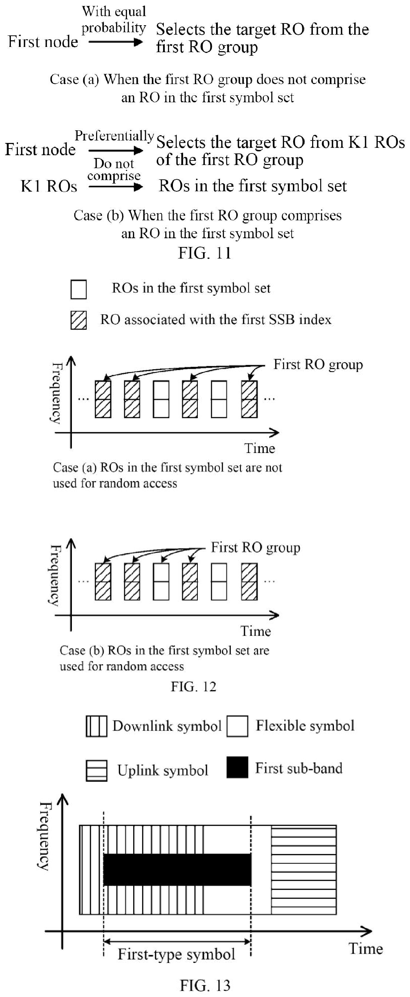

Embodiment 11 illustrates a schematic diagram of how a first node selects a target RO according to one embodiment of the present application, as shown in FIG. 11. In FIG. 11, case (a) indicates that when the first RO group does not comprise an RO in the first symbol set, the first node selects the target RO from the first RO group with an equal probability; case (b) indicates that when the first RO group comprises an RO in the first symbol set, the first node preferentially selects the target RO from K1 ROs of the first RO group, the K1 ROs do not comprise an RO in the first symbol set.

As one embodiment, when the first RO group does not comprise an RO in the first symbol set, the first node selects the target RO from the first RO group with an equal probability; when the first RO group comprises an RO in the first symbol set, the first node preferentially selects the target RO from K1 ROs of the first RO group, the K1 ROs do not comprise an RO in the first symbol set.

As one embodiment, the meaning of the feature "the first node selects the target RO from the first RO group with an equal probability" comprises: the first RO group comprises W1 ROs, and the probability that the first node selects any one RO among the W1 ROs as the target RO is the same, the W1 is a positive integer.

As one embodiment, the meaning of the feature "the first node selects the target RO from the first RO group with an equal probability" comprises: the first RO group comprises W1 ROs, and the probability that the first node selects any one RO among the W1 ROs as the target RO equals 1 divided by W1, the W1 is a positive integer.

As one embodiment, the meaning of the feature "the first node preferentially selects the target RO from K1 ROs of the first RO group" comprises: the first node selects the target RO from the K1 ROs with a first probability with an equal probability, and selects the target RO from the ROs in the first RO group other than the K1 ROs with a second probability with an equal probability, the first probability being greater than the second probability, and both the first probability and the second probability being fractions less than 1.

As one sub-embodiment of this embodiment, the number of ROs in the first RO group other than the K1 ROs equals K2, K2 is a positive integer greater than 1, the product of the first probability multiplied by K1 plus the product of the second probability multiplied by K2 equals 1.

As one embodiment, the meaning of the feature "the first node preferentially selects the target RO from K1 ROs of the first RO group" comprises: when the length of a first time window is less than a first time threshold, the first node selects the target RO from ROs in the first time window with an equal probability, and the first node does not select ROs in the first time window that comprise ROs in the first symbol set, the first time threshold is fixed or configured via higher layer signaling, the K1 ROs are located in the first time window, and the first time window starts from the first RO in the time domain in the first RO group.

## Embodiment 12

Embodiment 12 illustrates a schematic diagram of ROs included in a first RO group according to one embodiment of the present application, as shown in FIG. 12. In FIG. 12, an unfilled rectangle represents an RO in the first symbol set, and an upward-slanting line filled block represents an RO in one SSB-RO mapping cycle that is associated with the first SSB index.

In Embodiment 12, case (a) indicates that when the first RO group does not comprise an RO in the first symbol set, the first RO group only comprises all ROs associated with the first SSB index in one SSB-RO mapping cycle; case (b) indicates that when the first RO group comprises an RO in the first symbol set, the first RO group comprises some ROs associated with the first SSB index in one SSB-RO mapping cycle and some ROs in the first symbol set; and the number of ROs included in the first RO group is the same in both case (a) and case (b).

As one embodiment, ROs included in the first RO group occupy discontinuous time domain resources.

As one embodiment, there are two ROs in the first RO group that occupy consecutive time domain resources.

As one embodiment, when the first RO group does not comprise an RO in the first symbol set, ROs included in the first RO group are periodic in the time domain.

As one embodiment, when the first RO group does not comprise an RO in the first symbol set, ROs included in the first RO group are aperiodic in the time domain.

As one embodiment, when the first RO group comprises an RO in the first symbol set, ROs included in the first RO group are periodic in the time domain.

As one embodiment, when the first RO group comprises an RO in the first symbol set, ROs included in the first RO group are aperiodic in the time domain.

As one embodiment, some ROs in the first symbol set included in the first RO group and the at least some ROs constitute the first RO group.

As one embodiment, the first SSB index is mapped in sequence according to a given order to N consecutive valid ROs, the first RO group comprises the N valid ROs, and N is a positive integer.

As one sub-embodiment of this embodiment, ROs in the first symbol set are considered valid ROs, and when the N valid ROs comprise an RO in the first symbol set, the first RO comprises an RO in the first symbol set.

As one sub-embodiment of this embodiment, ROs in the first symbol set are not considered valid ROs, or when the N valid ROs do not comprise an RO in the first symbol set, the first RO does not comprise an RO in the first symbol set.

As one sub-embodiment of this embodiment, the given order index is indexed in ascending order of frequency domain resources first and then in ascending order of time domain resources.

As one sub-embodiment of this embodiment, the given order index is indexed in ascending order of time domain resources first and then in ascending order of frequency domain resources.

As one embodiment, when the first RO group comprises an RO in the first symbol set, the first RO group comprises some ROs associated with the first SSB index in one SSB-RO mapping cycle and ROs in the first symbol set located within a given time window.

As one sub-embodiment of this embodiment, the given time window is the duration of the one SSB-RO mapping cycle.

As one sub-embodiment of this embodiment, the given time window is the duration of one association period.

As one sub-embodiment of this embodiment, the given time window is less than the duration of the first SSB-RO mapping cycle.

As one sub-embodiment of this embodiment, the given time window is less than the duration of one association period.

**Embodiment 13**

Embodiment 13 illustrates a schematic diagram of symbols in a first symbol set according to one embodiment of the present application, as shown in FIG. 13. In FIG. 13, In FIG. 13, the horizontal axis represents time, and the vertical axis represents frequency; the vertically lined area represents time domain resources occupied by downlink symbols in time, the horizontally lined area represents time domain resources occupied by uplink symbols in time, the unfilled area represents time domain resources occupied by flexible symbols in time, and the grey solid-filled area represents a first subband, where the area occupied by the first subband represents frequency domain resources that can be used for uplink transmission among downlink symbols and flexible symbols in frequency.

In Embodiment 13, a first-type symbol comprises symbols configured as downlink symbols by TDD uplink/downlink configuration signaling and used for uplink transmission, and the first symbol set comprises the first-type symbol.

As one embodiment, the first-type symbol further comprises symbols configured as flexible symbols by TDD uplink/downlink configuration signaling and used for uplink transmission.

As one embodiment, the meaning of a symbol being configured as a downlink symbol in the present application comprises: the type of the symbol is DL.

As one embodiment, the meaning of a symbol being configured as an uplink symbol in the present application comprises: the type of the symbol is UL.

As one embodiment, the meaning of a symbol being configured as a flexible symbol in the present application comprises: the type of the symbol is F (flexible).

As one embodiment, the first subband occupies at least one RB (Resource Block) set in the frequency domain.

As one sub-embodiment of this embodiment, the one RB set is a group of consecutive RBs.

As one sub-embodiment of this embodiment, the RB set is configured by the higher layer parameter *"IntraCellGuardBandsPerSCS"*.

As one sub-embodiment of this embodiment, the RB set is configured by the higher layer parameter *"intraCellGuardBandsUL-List"*.

As one sub-embodiment of this embodiment, there is a guard band between two adjacent RB sets.

As one embodiment, there are guard bands on both sides of the first subband in the frequency domain.

As one embodiment, there is a guard band on one side of the first subband in the frequency domain.

As one embodiment, there are no guard bands on both sides of the first subband in the frequency domain.

As one sub-embodiment of the above three embodiments, the guard band is not used for uplink transmission or downlink transmission.

As one embodiment, the first subband occupies at least one RB in the frequency domain.

As one sub-embodiment of this embodiment, the at least one RB comprises one RB.

As one sub-embodiment of this embodiment, the at least one RB comprises multiple consecutive RBs.

As one embodiment, the RB in the present application comprises a PRB (Physical Resource Block).

As one embodiment, the RB in the present application refers to a PRB.

Typically, one RB occupies 12 consecutive subcarriers in the frequency domain.

As one embodiment, the first subband occupies multiple subcarriers in the frequency domain.

As one embodiment, the first subband belongs to one UL carrier.

As one embodiment, the frequency domain resources occupied by the first subband belong to one UL carrier.

As one embodiment, the UL carrier in the present application comprises a Normal UL (NUL) carrier.

As one embodiment, the UL carrier in the present application comprises a Supplementary UL (SUL) carrier.

As one embodiment, the first subband belongs to one DL carrier.

As one embodiment, the frequency domain resources occupied by the first subband belong to one DL carrier.

As one embodiment, the first subband belongs to one BWP.

As one embodiment, the first subband belongs to one UL BWP.

As one embodiment, the frequency domain resources occupied by the first subband belong to one UL BWP.

As one embodiment, the first subband belongs to one DL BWP.

As one embodiment, the frequency domain resources occupied by the first subband belong to one DL BWP.

As one embodiment, the first subband and one UL BWP have overlapping frequency domain resources.

As one embodiment, the first subband and one UL BWP have no overlapping frequency domain resources.

As one embodiment, the first subband comprises one SBFD (SubBand non-overlapping Full Duplex) subband.

As one embodiment, the first subband is one SBFD subband.

As one embodiment, one SBFD subband in the present application is used for uplink transmission.

As one embodiment, one SBFD subband in the present application can (or may or is allowed to) be used for uplink transmission.

As one embodiment, one SBFD subband in the present application is a UL subband.

As one embodiment, the first symbol set comprises a positive integer number of symbols greater than 1.

As one embodiment, the first symbol set comprises the first-type symbol.

As one embodiment, the first symbol set only comprises the first-type symbol.

As one embodiment, the first symbol set comprises full-duplex symbols.

As one embodiment, the first symbol set comprises SBFD symbols.

As one embodiment, the symbols in the first symbol set are configured for SBFD.

As one embodiment, the first symbol set comprises downlink symbols indicated by the TDD uplink/downlink configuration signaling that are used for uplink transmission.

As one embodiment, the first symbol set comprises flexible symbols indicated by the TDD uplink/downlink configuration signaling that are used for uplink transmission.

As one embodiment, all symbols in the first symbol set are downlink symbols indicated by the TDD uplink/downlink configuration signaling that are used for uplink transmission.

As one embodiment, any symbol in the first symbol set is a downlink symbol indicated by the TDD uplink/downlink configuration signaling that is used for uplink transmission or a flexible symbol indicated by the TDD uplink/downlink configuration that is used for uplink transmission.

As one embodiment, a symbol in the first symbol set is configured to be able (or can or is allowed to) perform uplink transmission in the first subband.

As one embodiment, a symbol in the first symbol set is indicated to be able (or can or is allowed to) perform uplink transmission in the first subband.

As one embodiment, a symbol in the first symbol set is configured to actually perform uplink transmission in the first subband.

As one embodiment, a symbol in the first symbol set is indicated to actually perform uplink transmission in the first subband.

As one embodiment, the first subband is indicated to be enabled on symbols in the first symbol set.

As one embodiment, ROs occupying frequency domain resources of the first subband in the first symbol set can be selected to send random access preambles.

As one embodiment, ROs occupying frequency domain resources of the first subband in the first symbol set cannot be selected to send random access preambles.

As one embodiment, ROs occupying frequency domain resources where the first subband and the initial BWP overlap in the first symbol set can be selected to send random access preambles.

As one embodiment, ROs occupying frequency domain resources where the first subband and the active BWP overlap in the first symbol set can be selected to send random access preambles.

As one embodiment, a symbol in the first symbol set is used for both sending and receiving simultaneously.

As one embodiment, a symbol in the first symbol set supports simultaneous uplink transmission and downlink transmission.

As one embodiment, a sender of the first information block simultaneously receives and sends a wireless signal on a symbol in the first symbol set.

As one embodiment, the sender of the first information block simultaneously performs uplink transmission and downlink transmission on a symbol in the first symbol set.

As one embodiment, the sender of the first information block receives a wireless signal on frequency domain resources included in the first subband of the symbol in the first symbol set, and sends the wireless signal on frequency domain resources other than those included in the first subband.

As one embodiment, the sender of the first information block performs uplink transmission within the frequency domain resources included in the first subband of the symbol in the first symbol set, and performs downlink transmission on frequency domain resources other than those included in the first subband.

## Embodiment 14

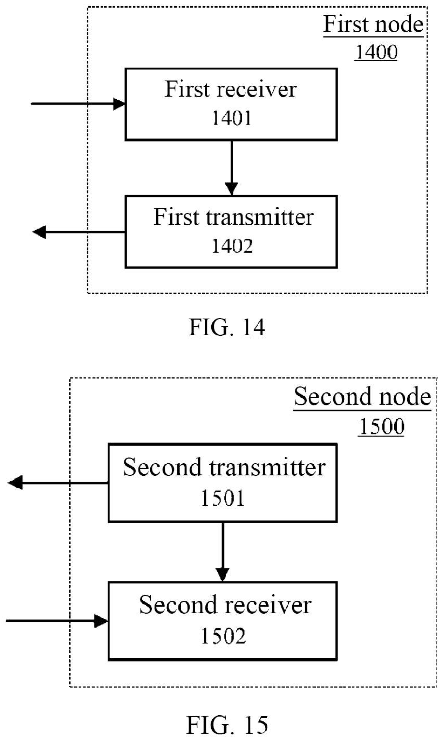

Embodiment 14 illustrates a structural block diagram of a processing apparatus used in a first node according to one embodiment of the present application, as shown in FIG. 14. In FIG. 14, a processing apparatus 1400 in a first node comprises a first receiver 1401 and a first transmitter 1402.

In Embodiment 14, the first receiver 1401 receives a first information block, the first information block indicating a first symbol set; the first transmitter 1402 selects a target RO from a first RO group and transmits a random access preamble in the target RO.

In Embodiment 14, the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the first receiver 1401 receives a second information block, the second information block indicating a first RO set; each RO in the first RO set is mapped to the first SSB index, and there is at least one RO among the ROs included in the first RO group that belongs to the first RO set.

As one embodiment, the first receiver 1401 receives first signaling, the first signaling indicating a first PRACH mask index value; among the ROs in the one SSB-RO mapping cycle that are associated with the first SSB index, only an RO indicated by the first PRACH mask index value belongs to the first RO group.

As one embodiment, the more the ROs included in the first RO group in the first symbol set, the fewer the ROs included in the at least some ROs.

As one embodiment, when the first RO group does not comprise an RO in the first symbol set, the first RO group comprises all ROs associated with the first SSB index in one SSB-RO mapping cycle; when the first RO group comprises an RO in the first symbol set, the first RO group comprises some ROs associated with the first SSB index in one SSB-RO mapping cycle.

As one embodiment, the first receiver 1401 receives a target information block; the target information block indicates whether the first symbol set is used for random access; when the first symbol set is used for the random access, the first RO group comprises an RO in the first symbol set; when the first symbol set is not used for the random access, the first RO group does not comprise an RO in the first symbol set.

As one embodiment, when the first RO group does not comprise an RO in the first symbol set, the first node selects the target RO from the first RO group with equal probability; when the first RO group comprises an RO in the first symbol set, the first node preferentially selects the target RO from K1 ROs of the first RO group, the K1 ROs do not comprise an RO in the first symbol set.

As one embodiment, the first RO set corresponds to ROs mapped to the first SSB index within one association pattern period, and the ROs included in the first RO group belong to ROs associated with the first SSB index within one association period included in the one association pattern period.

As one embodiment, the first RO set corresponds to ROs mapped to the first SSB index within one association pattern period, and the ROs included in the first RO group belong to ROs associated with the first SSB index within one SSB-RO mapping cycle included in the one association pattern period.

As one embodiment, the first node selects the target RO from the K1 ROs with a first probability with an equal probability, and selects the target RO from the ROs in the first RO group other than the K1 ROs with a second probability with an equal probability, the first probability being greater than the second probability, and both the first probability and the second probability being fractions less than 1.

As one embodiment, the first SSB index is mapped in sequence according to a given order to N consecutive valid ROs, the first RO group comprises the N valid ROs, and N is a positive integer; when ROs in the first symbol set are considered valid ROs and the N valid ROs comprise an RO in the first symbol set, the first RO comprises an RO in the first symbol set; when ROs in the first symbol set are not considered valid ROs, or the N valid ROs do not comprise an RO in the first symbol set, the first RO does not comprise an RO in the first symbol set.

As one sub-embodiment of this embodiment, the given order index is indexed in ascending order of frequency domain resources first and then in ascending order of time domain resources.

As one sub-embodiment of this embodiment, the given order index is indexed in ascending order of time domain resources first and then in ascending order of frequency domain resources.

As one embodiment, the first node is user equipment.

As one embodiment, the first node is a relay node device.

As one embodiment, the first receiver 1401 comprises at least one of {the antenna 452, the receiving device 454, the receiving processor 456, the multi-antenna receiving processor 458, the controller/processor 459, the memory 460, the data source 467} in Embodiment 4.

As one embodiment, the first transmitter 1402 comprises at least one of {the antenna 452, the transmitting device 454, the transmitting processor 468, the multi-antenna transmitting processor 457, the controller/processor 459, the memory 460, the data source 467} in Embodiment 4.

## Embodiment 15

Embodiment 15 illustrates a structural block diagram of a processing apparatus used in a second node according to one embodiment of the present application, as shown in FIG. 15. In FIG. 15, a processing apparatus 1500 in a second node comprises a second transmitter 1501 and a second receiver 1502.

In Embodiment 15, the second transmitter 1501 sends a first information block, the first information block indicating a first symbol set; the second receiver 1502 sends a random access preamble in a target RO.

In Embodiment 15, a recipient of the first information block selects the target RO from a first RO group; the first symbol set comprises at least one symbol configured as a downlink symbol by TDD uplink/downlink configuration signaling and used for uplink transmission; the first RO group comprises at least some ROs in one SSB-RO mapping cycle that are associated with a first SSB index, and the at least some ROs depend on whether the first RO group comprises an RO in the first symbol set.

As one embodiment, the second transmitter 1501 sends a second information block, the second information block indicating a first RO set; each RO in the first RO set is mapped to the first SSB index, and there is at least one RO among the ROs included in the first RO group that belongs to the first RO set.

As one embodiment, the second transmitter 1501 sends first signaling, the first signaling indicating a first PRACH mask index value; among the ROs in the one SSB-RO mapping cycle that are associated with the first SSB index, only an RO indicated by the first PRACH mask index value belongs to the first RO group.

As one embodiment, the more the ROs included in the first RO group in the first symbol set, the fewer the ROs included in the at least some ROs.

As one embodiment, when the first RO group does not comprise an RO in the first symbol set, the first RO group comprises all ROs associated with the first SSB index in one SSB-RO mapping cycle; when the first RO group comprises an RO in the first symbol set, the first RO group comprises some ROs associated with the first SSB index in one SSB-RO mapping cycle.

As one embodiment, the second transmitter 1501 sends a target information block; the target information block indicates whether the first symbol set is used for random access; when the first symbol set is used for the random access, the first RO group comprises an RO in the first symbol set; when the first symbol set is not used for the random access, the first RO group does not comprise an RO in the first symbol set.

As one embodiment, when the first RO group does not comprise an RO in the first symbol set, the recipient of the first information block selects the target RO from the first RO group with an equal probability; when the first RO group comprises an RO in the first symbol set, the recipient of the first information block preferentially selects the target RO from K1 ROs of the first RO group, wherein the K1 ROs do not comprise an RO in the first symbol set.

As one embodiment, the first RO set corresponds to ROs mapped to the first SSB index within one association pattern period, and the ROs included in the first RO group belong to ROs associated with the first SSB index within one association period included in the one association pattern period.

As one embodiment, the first RO set corresponds to ROs mapped to the first SSB index within one association pattern period, and the ROs included in the first RO group belong to ROs associated with the first SSB index within one SSB-RO mapping cycle included in the one association pattern period.

As one embodiment, the recipient of the first information block selects the target RO from the K1 ROs with a first probability with an equal probability, and selects the target RO from the ROs in the first RO group other than the K1 ROs with a second probability with an equal probability, the first probability being greater than the second probability, and both the first probability and the second probability being fractions less than 1.

As one embodiment, the first SSB index is mapped in sequence according to a given order to N consecutive valid ROs, the first RO group comprises the N valid ROs, and N is a positive integer; when ROs in the first symbol set are considered valid ROs and the N valid ROs comprise an RO in the first symbol set, the first RO comprises an RO in the first symbol set; when ROs in the first symbol set are not considered valid ROs, or the N valid ROs do not comprise an RO in the first symbol set, the first RO does not comprise an RO in the first symbol set.

As one sub-embodiment of this embodiment, the given order index is indexed in ascending order of frequency domain resources first and then in ascending order of time domain resources.

As one sub-embodiment of this embodiment, the given order index is indexed in ascending order of time domain resources first and then in ascending order of frequency domain resources.

As one embodiment, the second node is a base station device.

As one embodiment, the second node is a user equipment.

As one embodiment, the second node is a relay node device.

As one embodiment, the second transmitter 1501 comprises at least one of {the antenna 420, the transmitting device 418, the transmitting processor 416, the multi-antenna transmitting processor 471, the controller/processor 475, the memory 476} in Embodiment 4.

As one embodiment, the second receiver 1502 comprises at least one of {the antenna 420, the receiving device 418, the receiving processor 470, the multi-antenna receiving processor 472, the controller/processor 475, the memory 476} in Embodiment 4.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, terminals and UE in the present application comprise but are not limited to drones, communication modules on drones, remote-controlled aircrafts, aircrafts, small aircrafts, mobile phones, tablet computers, notebooks, vehicle-mounted communication devices, transport vehicles, vehicles, RSUs, wireless sensors, Internet cards, Internet of Things terminals, radio frequency identification (RFID) terminals, narrow band Internet of Things (NB-IoT) terminals, machine type communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application comprise but are not limited to macrocell base stations, microcell base stations, small cell base stations, femtocells, relay base stations, evolved Nodes B (eNBs), gNBs, TRPs, global navigation satellite systems (GNSSs), relay satellites, satellite base stations, aerial base stations, RSUs, drones, test devices, such as transceiving apparatus or signaling testers that simulate some functions of the base stations, and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the preceding description, and all changes within their equivalent meanings and areas are deemed to be included therein.

**Claims**

1. A first node for wireless communication, comprising:

   a first receiver receiving a first information block, the first information block indicating a first symbol set; and
   a first transmitter selecting a target RO from a first RO group, and sending a random access preamble in the target RO,
   wherein the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

2. The first node according to claim 1, comprising:

   the first receiver receiving a second information block, the second information block indicating a first RO set,
   wherein each RO in the first RO set is mapped to the first SSB index, and there is at least one RO among the ROs included in the first RO group that belongs to the first RO set.

3. The first node according to claim 1 or 2, comprising:

   the first receiver receiving first signaling, the first signaling indicating a first PRACH mask index value,
   wherein among the ROs associated with the first SSB index in the one SSB-RO mapping cycle, only an RO indicated by the first PRACH mask index value belongs to the first RO group.

4. The first node according to any one of claims 1 to 3, wherein the more the ROs included in the first RO group in the first symbol set, the fewer the ROs included in the at least some ROs.

5. The first node according to any one of claims 1 to 4, wherein when the first RO group does not comprise an RO in the first symbol set, the first RO group comprises all ROs associated with the first SSB index in one SSB-RO mapping cycle; and when the first RO group comprises the RO in the first symbol set, the first RO group comprises some ROs associated with the first SSB index in one SSB-RO mapping cycle.

6. The first node according to any one of claims 1 to 5, comprising:

the first receiver receiving a target information block,
wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

7. The first node according to any one of claims 1 to 6, wherein when the first RO group does not comprise an RO in the first symbol set, the first node selects the target RO from the first RO group with an equal probability; and when the first RO group comprises an RO in the first symbol set, the first node preferentially selects the target RO from K1 ROs of the first RO group, and the K1 ROs do not comprise an RO in the first symbol set.

8. A second node for wireless communication, comprising:

a second transmitter sending a first information block, the first information block indicating a first symbol set; and
a second receiver receiving a random access preamble in a target RO,
wherein a recipient of the first information block selects the target RO from a first RO group; the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

9. The second node according to claim 8, comprising: the second transmitter sending a second information block, wherein the second information block indicates a first RO set; and each RO in the first RO set is mapped to the first SSB index, and there is at least one RO among the ROs included in the first RO group that belongs to the first RO set.

10. The second node according to claim 8 or 9, comprising: the second transmitter sending first signaling, the first signaling indicating a first PRACH mask index value, wherein among the ROs associated with the first SSB index in the one SSB-RO mapping cycle, only an RO indicated by the first PRACH mask index value belongs to the first RO group.

11. The second node according to any one of claims 8 to 10, wherein the more the ROs included in the first RO group in the first symbol set, the fewer the ROs included in the at least some ROs.

12. The second node according to any one of claims 8 to 11, wherein when the first RO group does not comprise an RO in the first symbol set, the first RO group comprises all ROs associated with the first SSB index in one SSB-RO mapping cycle; and when the first RO group comprises the RO in the first symbol set, the first RO group comprises some ROs associated with the first SSB index in one SSB-RO mapping cycle.

13. The second node according to any one of claims 8 to 12, comprising: the second transmitter sending a target information block, wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

14. The second node according to any one of claims 8 to 13, wherein when the first RO group does not comprise an RO in the first symbol set, the recipient of the first information block selects the target RO from the first RO group with an equal probability; and when the first RO group comprises an RO in the first symbol set, the recipient of the first information block preferentially selects the target RO from K1 ROs of the first RO group, and the K1 ROs do not comprise an RO in the first symbol set.

15. A method for use in a first node for wireless communication, comprising:

　　receiving a first information block, the first information block indicating a first symbol set; and
selecting a target RO from a first RO group, and sending a random access preamble in the target RO,
wherein the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

16. The method according to claim 15, comprising: receiving a second information block, the second information block indicating a first RO set, wherein each RO in the first RO set is mapped to the first SSB index, and there is at least one RO among the ROs included in the first RO group that belongs to the first RO set.

17. The method according to claim 15 or 16, comprising: receiving first signaling, the first signaling indicating a first PRACH mask index value, wherein among the ROs associated with the first SSB index in the one SSB-RO mapping cycle, only an RO indicated by the first PRACH mask index value belongs to the first RO group.

18. The method according to any one of claims 15 to 17, wherein the more the ROs included in the first RO group in the first symbol set, the fewer the ROs included in the at least some ROs.

19. The method according to any one of claims 15 to 18, wherein when the first RO group does not comprise an RO in the first symbol set, the first RO group comprises all ROs associated with the first SSB index in one SSB-RO mapping cycle; and when the first RO group comprises the RO in the first symbol set, the first RO group comprises some ROs associated with the first SSB index in one SSB-RO mapping cycle.

20. The method according to any one of claims 15 to 19, comprising: receiving a target information block, wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

21. The method according to any one of claims 15 to 20, wherein when the first RO group does not comprise an RO in the first symbol set, the first node selects the target RO from the first RO group with an equal probability; and when the first RO group comprises an RO in the first symbol set, the first node preferentially selects the target RO from K1 ROs of the first RO group, and the K1 ROs do not comprise an RO in the first symbol set.

22. A method for use in a second node for wireless communication, comprising:

　　sending a first information block, the first information block indicating a first symbol set; and
receiving a random access preamble in a target RO,
wherein a recipient of the first information block selects the target RO from a first RO group; the first symbol set comprises at least one symbol configured as a downlink symbol by TDD uplink/downlink configuration signaling and used for uplink transmission; and the first RO group comprises at least some ROs associated with a first SSB index in one SSB-RO mapping cycle, and the at least some ROs depend on whether the first RO group comprises an RO in the first symbol set.

23. The method according to claim 22, comprising: sending a second information block, the second information block indicating a first RO set, wherein each RO in the first RO set is mapped to the first SSB index, and there is at least one RO among the ROs included in the first RO group that belongs to the first RO set.

24. The method according to claim 22 or 23, comprising: sending first signaling, the first signaling indicating a first PRACH mask index value, wherein among the ROs associated with the first SSB index in the one SSB-RO mapping cycle, only an RO indicated by the first PRACH mask index value belongs to the first RO group.

25. The method according to any one of claims 22 to 24, wherein the more the ROs included in the first RO group in the first symbol set, the fewer the ROs included in the at least some ROs.

26. The method according to any one of claims 22 to 25, wherein when the first RO group does not comprise an RO in the first symbol set, the first RO group comprises all ROs associated with the first SSB index in one SSB-RO mapping cycle; and when the first RO group comprises the RO in the first symbol set, the first RO group comprises some ROs associated with the first SSB index in one SSB-RO mapping cycle.

27. The method according to any one of claims 22 to 26, comprising: sending a target information block, wherein the target information block indicates whether the first symbol set is used for random access; when the first symbol set is used for the random access, the first RO group comprises an RO in the first symbol set; and when the first symbol set is not used for the random access, the first RO group does not comprise an RO in the first symbol set.

28. The method according to any one of claims 22 to 27, wherein when the first RO group does not comprise an RO in the first symbol set, the recipient of the first information block selects the target RO from the first RO group with an equal probability; and when the first RO group comprises an RO in the first symbol set, the recipient of the first information block preferentially selects the target RO from K1 ROs of the first RO group, and the K1 ROs do not comprise an RO in the first symbol set.

FIG. 1

FIG. 2

FIG. 3

FIG. 4

FIG. 5

Second information block —Indicates→ First RO set

RO#1
⋮
RO#n —Mapped to→ First SSB index
⋮
RO#N

Mapped to

Mapped to

FIG. 6

First RO group —Comprises→ ROs in the first symbol set

Case (a) When the first symbol set is used
for random access

First RO group —Does not comprise→ ROs in the first symbol set

Case (b) When the first symbol set is not used
for random access

FIG. 7

First signaling

↓ Indicates

First PRACH mask index value —Indicates→

RO#1
⋮
RO#m
⋮
RO#M

—Belonging to→ First RO group

ROs in one SSB-RO mapping cycle
that are associated with a first SSB index

FIG. 8

The more the ROs included in the first RO group in the first symbol set —→ The fewer the ROs included in the at least some ROs

FIG. 9

First RO group —Comprises→ All ROs in one SSB-RO mapping cycle that are associated with the first SSB index

Case (a) When the first RO group does not comprise an RO in the first symbol set

First RO group —Comprises→ Part of ROs in one SSB-RO mapping cycle that are associated with the first SSB index

Case (b) When the first RO group comprises an RO in the first symbol set

FIG. 10

First node $\xrightarrow[\text{probability}]{\text{With equal}}$ Selects the target RO from the first RO group

Case (a) When the first RO group does not comprise an RO in the first symbol set

First node $\xrightarrow{\text{Preferentially}}$ Selects the target RO from K1 ROs of the first RO group

K1 ROs $\xrightarrow[\text{comprise}]{\text{Do not}}$ ROs in the first symbol set

Case (b) When the first RO group comprises an RO in the first symbol set

FIG. 11

☐ ROs in the first symbol set

▨ RO associated with the first SSB index

Case (a) ROs in the first symbol set are not used for random access

Case (b) ROs in the first symbol set are used for random access

FIG. 12

▥ Downlink symbol  ☐ Flexible symbol

⊟ Uplink symbol  ■ First sub-band

FIG. 13

First node
1400

First receiver
1401

First transmitter
1402

FIG. 14

Second node
1500

Second transmitter
1501

Second receiver
1502

FIG. 15

## INTERNATIONAL SEARCH REPORT

| International application No. |
| --- |
| **PCT/CN2024/106331** |

| A. | CLASSIFICATION OF SUBJECT MATTER |
| --- | --- |

H04W74/08(2024.01)i

According to International Patent Classification (IPC) or to both national classification and IPC

| B. | FIELDS SEARCHED |
| --- | --- |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

WPABSC; CNTXT; WOTXT; EPTXT; USTXT; 3GPP: 符号集合, 接入时机, 信道, 映射, 循环, 关联, RO, TDD, SSB, symbol set, access occasion, channel, mapping, cycling

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114448577 A (SHANGHAI LANGBO COMMUNICATION TECHNOLOGY CO., LTD.) 06 May 2022 (2022-05-06) claims 1-10 | 1-4, 8-11, 15-20, 22-25 |
| Y | CN 116234052 A (HUAWEI TECHNOLOGIES CO., LTD.) 06 June 2023 (2023-06-06) claims 1-30 | 1-4, 8-11, 15-20, 22-25 |
| A | CN 116133003 A (SHANGHAI LANGBO COMMUNICATION TECHNOLOGY CO., LTD.) 16 May 2023 (2023-05-16) claims 1-10 | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 October 2024** | **17 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/106331**

| Patent document cited in search report | | | Publication date (day/month/year) | Patent family member(s) | Publication date (day/month/year) |
|---|---|---|---|---|---|
| CN | 114448577 | A | 06 May 2022 | None | |
| CN | 116234052 | A | 06 June 2023 | None | |
| CN | 116133003 | A | 16 May 2023 | None | |

Form PCT/ISA/210 (patent family annex) (July 2022)